(19)

**Europäisches Patentamt**

**European Patent Office**

**Office européen des brevets**

(11)  **EP 4 757 187 A1**

(12)  **DEMANDE DE BREVET EUROPEEN**

(43) Date de publication:
**10.06.2026   Bulletin 2026/24**

(21) Numéro de dépôt: **25220522.4**

(22) Date de dépôt: **03.12.2025**

(51) Classification Internationale des Brevets (IPC):
***H04B 1/00*** *(2006.01)*

(52) Classification Coopérative des Brevets (CPC):
**H04B 1/00**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité:   **04.12.2024   FR 2413423**

(71) Demandeur: **THALES**
**92190 Meudon (FR)**

(72) Inventeur: **OSTER, Yann**
**31037 TOULOUSE CEDEX (FR)**

(74) Mandataire: **Lavoix**
**2, place d'Estienne d'Orves**
**75441 Paris Cedex 09 (FR)**

(54)  **PROCESSEUR DE TÉLÉCOMMUNICATION COMPRENANT UN DISPOSITIF D'INTERCONNEXION RECONFIGURABLE**

(57)   L'invention concerne un processeur de télécommunication qui comprend un dispositif d'interconnexion non bloquant reconfigurable, configuré pour recevoir sur des entrées des signaux issus d'une ou plusieurs antennes en réception et délivrer via des sorties lesdits signaux vers une ou plusieurs antennes en émission. Le dispositif d'interconnexion comprend un commutateur à barres croisées formant un réseau à deux dimensions de lignes et colonnes, et comprenant un nombre de commutateurs élémentaires inférieur au nombre d'intersections ligne-colonne du réseau à deux dimensions, pour router lesdits signaux des entrées vers les sorties. Les commutateurs élémentaires sont agencés à des intersections ligne-colonne pour former au moins une matrice triangulaire, tel que toutes les intersections ligne-colonne dans la matrice triangulaire comportent un commutateur élémentaire pouvant être activé, et tel que tout ou partie des intersections ligne-colonne situées en dehors de la matrice triangulaire ne comportent pas de commutateur élémentaire.

FIG.1

## Description

L'invention concerne un processeur de télécommunication comprenant un dispositif d'interconnexion reconfigurable et un procédé de configuration du processeur selon l'invention.

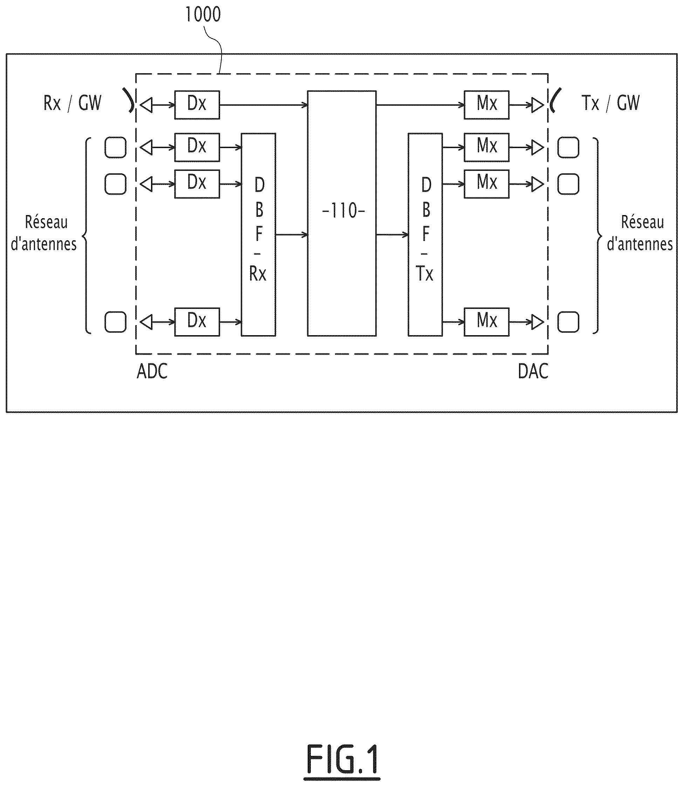

La figure 1 illustre un exemple de processeur de télécommunication selon l'art antérieur. Typiquement, un processeur de télécommunication 1000, comprend des ports d'entrée Rx et des ports de sortie Tx connectés à des chaines de réception ou d'émission, radiofréquences (RF) ou optiques.

Les ports Rx (respectivement Tx) sont associés à des antennes en réception (respectivement en émission), pour assurer la liaison avec d'une part des stations fixes relais, dites « gateway » (GW) et d'autre part des utilisateurs (fixes ou mobiles). Les antennes assurant l'émission ou la réception vers les utilisateurs peuvent être de type antenne active (réseau d'antennes, « phased array »), et constituées d'un ensemble d'antennes élémentaires dont les signaux peuvent être combinés selon une loi de formation de faisceau configurable pour former des faisceaux dans les directions souhaitées, de manière flexible.

Les chaines d'émission ou de réception sont respectivement connectées à des antennes RF ou à des dispositifs de transmission optique. Par exemple, les chaines de réception ou d'émission traitent des signaux optiques lorsque le système de télécommunication comprenant le processeur utilise des liaisons optiques en espace libre.

Au niveau des ports d'entrées Rx et des ports de sortie Tx, les signaux peuvent être reçus, respectivement émis, simultanément depuis, ou vers, un ensemble de directions différentes, en fonction du diagramme de la ou des antennes associées au port. Les signaux comprennent généralement des canaux fréquentiels dans lesquels l'information transmise est encodée.

Un signal RF peut être reçu par une antenne ou un réseau d'antennes. Le signal électrique reçu est généralement traité (dans des chaines de réception) de manière analogique pour pré-filtrer la bande de fréquence, pour l'amplifier, ou pour réaliser une transposition de fréquence afin de décaler la bande utile autour d'une fréquence intermédiaire. En particulier, dans un processeur numérique, le signal est ensuite converti en un signal numérique par des convertisseurs analogique-numérique ADC. Le signal reçu peut en outre subir des traitements numériques complémentaires de filtrage fréquentiel. Les signaux reçus et numérisés peuvent être décomposés en leurs composantes fréquentielles élémentaires par des démultiplexeurs Dx. Les composantes fréquentielles produites par les démultiplexeurs peuvent être traitées par une unité de formation de faisceau DBF-RX.

Les signaux RF peuvent être filtrés spatialement selon des directions spécifiques du fait de la géométrie spécifique de la ou des antennes (telles que des RX/GW).

Alternativement, des faisceaux peuvent être produits en utilisant un ensemble d'antennes élémentaires associé à des traitements des signaux associés. Ces traitements de formation de faisceaux peuvent être réalisés de manière analogique, notamment dans un processeur analogique de télécommunication, ou de manière numérique, notamment dans un processeur numérique de télécommunication.

Les signaux mis en forme sont ensuite routés vers les ports d'entrée d'un dispositif d'interconnexion **110**. Les signaux délivrés par le dispositif d'interconnexion **110** peuvent être éventuellement traités par une unité de formation de faisceau en émission DBF-TX. Puis, des multiplexeurs Mx composent les signaux soit en sortie directement du dispositif d'interconnexion **110,** soit en sortie de l'unité de formation de faisceau DBF-TX.

Les signaux composés sont convertis en signaux analogiques par des convertisseurs numérique-analogique DAC, avant d'être amplifiés (dans des chaines d'émission) pour être émis par des antennes en émission (TX.GW, réseau d'antennes).

Le dispositif d'interconnexion **110** met en œuvre une fonction de routage des signaux reçus sur ses entrées pour les produire sur ses sorties. Le dispositif d'interconnexion est reconfigurable pour sélectionner la ou les sorties associées aux diverses entrées. Le dispositif d'interconnexion 110 réalise donc une connectivité flexible entre les canaux en réception en amont et les canaux en émission en aval, un canal étant considéré comme une ressource en termes de direction et en termes de sous-bandes de fréquences, et associée à un signal utile (pour un utilisateur ou pour une station gateway), en émission ou en réception.

De par sa position au cœur du processeur, le dispositif d'interconnexion traite l'intégralité du trafic de données. Notamment, le débit numérique traité par le dispositif d'interconnexion 110 est proportionnel à la largeur de bande agrégée totale (qui dépend du nombre de faisceaux et de la largeur de bande moyenne par faisceau, par exemple de l'ordre de plusieurs centaines de GHz) et de la quantification utilisée pour les signaux numériques (par exemple de 16 bits).

Le dispositif d'interconnexion est agencé typiquement en lignes et colonnes de routage. Des commutateurs aux intersections des lignes et des colonnes permettent de router un signal depuis une ligne vers une colonne ou inversement. En fonction de son architecture, autrement dit de l'agencement des commutateurs, un dispositif d'interconnexion peut être capable de router un signal depuis l'une quelconque de ses entrées vers l'une quelconque ou vers plusieurs de ses sorties, indépendamment des lignes et colonnes déjà connectées. En particulier, un dispositif d'interconnexion est dit « bloquant », s'il ne possède pas cette propriété. Le dispositif d'interconnexion est dit « conditionnellement non bloquant », s'il peut mettre en œuvre une nouvelle interconnexion quelconque à la condition de reconfigurer des connexions des lignes et colonnes déjà établies. Enfin, le dispositif d'interconnexion est dit « strictement non bloquant » s'il peut mettre en œuvre une interconnexion quelconque sans recourir à une reconfiguration des lignes et colonnes déjà établies.

Lorsqu'une entrée délivre son signal à une seule sortie, on parle de connexion unicast. Lorsqu'une entrée délivre son signal à plusieurs sorties, on parle de connexion multicast. En particulier, dans une application où le processeur est embarqué dans un satellite, la connexion multicast est utilisée pour diffuser simultanément une même information à destination de plusieurs destinataires, lesquels sont en particulier visibles depuis diverses directions et/ou utilisent différents canaux fréquentiels.

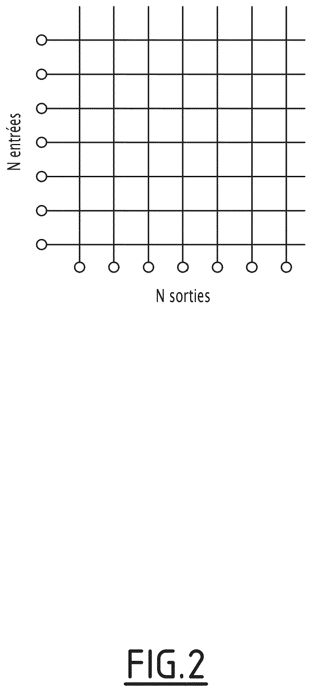

Un dispositif d'interconnexion reconfigurable d'architecture simple est un commutateur à barres croisées (ou « crossbar switch » en anglais) par exemple illustré en figure 2. L'exemple de commutateur à barres croisées forme un réseau (ou une matrice) carré à deux dimensions de N lignes et de N colonnes. Le commutateur à barres croisées comprend des commutateurs élémentaires aux intersections des lignes et des colonnes (non illustrés). Une connexion entre une ligne et une colonne est notamment obtenue en rendant passant le commutateur situé à l'intersection de cette ligne et de cette colonne.

De manière plus générale, un dispositif d'interconnexion reconfigurable de type commutateur à barres croisées présente une architecture rectangulaire comprenant N lignes et P colonnes.

Dans le contexte de la présente demande, pour des raisons de simplification de la description et non de limitation, une dimension du réseau désigne une direction le long de laquelle sont positionnées soit les lignes, soit les colonnes.

Les entrées du commutateur à barres croisées sont situées suivant une première dimension, et les sorties du commutateur a barres croisées sont situées suivant une deuxième dimension. Ainsi, dans l'exemple illustré en figure 2, la première dimension est celle le long de laquelle les lignes sont positionnées, et la deuxième dimension est celle le long de laquelle les colonnes sont positionnées. Cependant l'inverse est possible.

Dans l'exemple simplifié d'une matrice carrée de la figure 2, les entrées du commutateur à barres croisées sont situées le long d'un côté gauche du réseau carré ; et les sorties du commutateur à barres croisées sont situées le long d'un côté inférieur du réseau carré. Cependant, les entrées et sorties pourraient être positionnées sur d'autres côtés du réseau carré.

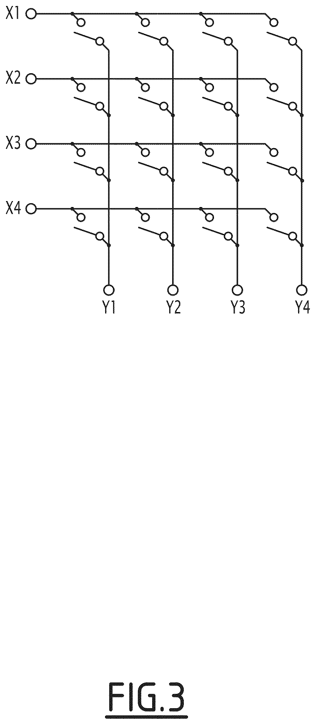

Les commutateurs élémentaires situés aux intersections ligne-colonne, peuvent être des interrupteurs 1X1, par exemple comme illustré en figure 3. Un interrupteur 1X1 possède une entrée et une sortie et établit sélectivement la connexion entre son entrée et sa sortie. Dans un circuit électronique intégré, l'interrupteur 1X1 peut être réalisé par un transistor FET. De manière connue en soi, la configuration du commutateur à barres croisées utilisant des interrupteurs 1X1 doit garantir l'absence de contention du signal, à savoir l'impossibilité pour plusieurs entrées de transmettre leurs entrées sur une même sortie. Ainsi, notamment, lorsqu'en entrée plusieurs lignes sont pilotées à faible impédance, chaque colonne du commutateur à barres croisées présente au plus un seul interrupteur 1X1 fermé.

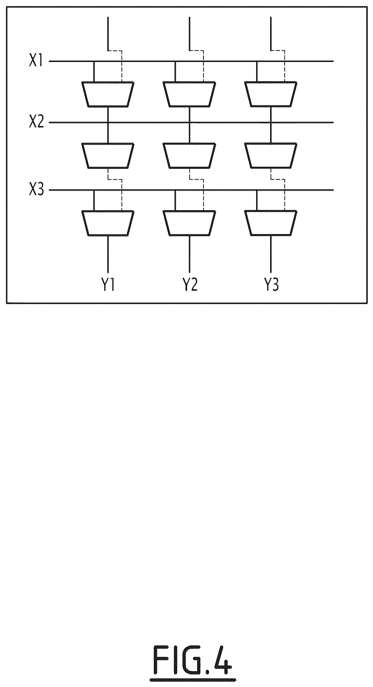

Les commutateurs élémentaires peuvent être des commutateurs 2X1, notamment encore appelés multiplexeurs, par exemple comme illustré en figure 4. Un multiplexeur 2X1 possède deux entrées et une sortie et établit sélectivement la connexion entre sa première entrée ou sa deuxième entrée et sa sortie. Par exemple, en figure 4, chaque multiplexeur 2X1 sélectionne le signal présent sur son entrée ligne ou celui sur son entrée colonne, et la propage sur sa sortie colonne. Le multiplexeur 2x1 permet notamment d'éviter tout risque de contention entre les entrées lignes.

Un commutateur à barres croisées est particulièrement avantageux en ce qu'il est non bloquant pour des connexions unicast ou multicast. Cependant, la complexité d'implémentation et la consommation d'un commutateur à barres croisées sont quadratiques avec son nombre d'entrées-sorties.

Un commutateur « crossbar » rectangulaire de N lignes et P colonnes, consistant en un réseau matriciel plein, i.e. avec un commutateur élémentaire à chaque intersection ligne-colonne, présente une complexité en termes de commutateurs élémentaires de N*P.

Dans le cas où le commutateur est un réseau matriciel carré (N=P), le nombre de commutateurs élémentaires est de N2.

Or, le débit numérique et le nombre d'entrées-sorties pris en charge par les actuels processeurs de télécommunication ont tendance à augmenter. Ceci est particulièrement impactant dans une application où le processeur de télécommunication est embarqué dans un satellite.

Il est donc recherché une solution à la fois au problème de la complexité d'implémentation et de la consommation d'un dispositif d'interconnexion reconfigurable d'un processeur de télécommunication.

A cet effet, l'invention propose un assemblage spécifique des commutateurs élémentaires du commutateur à barres croisées combiné à une permutation des lois de formation des faisceaux des signaux en amont ou en aval du réseau, ou combiné à une permutation des signaux en amont du commutateur à barres croisées.

L'assemblage des commutateurs élémentaires pour un commutateur à barres croisées, définit un réseau matriciel carré ou rectangulaire partiel, où il n'est pas implémenté de commutateurs élémentaires au sein d'au moins une matrice triangulaire de manière à définir au moins une matrice triangulaire de commutateurs actifs dans le réseau.

La complexité en commutateurs élémentaires est alors réduite. La mise en œuvre par un dispositif de permutation des lois de formation de faisceaux en amont ou en aval du réseau matriciel, ou de permutation des signaux en amont du réseau matriciel, permet de garantir l'établissement de toute connexion unicast et multicast par le dispositif d'interconnexion reconfigurable de type commutateur à barres croisées présentant une architecture comprenant N lignes et P colonnes.

Ainsi pour configurer le routage des signaux, en appliquant des permutations spécifiques en amont ou en aval du commutateur à barres croisées, de manière appropriée avec une configuration spécifique des commutateurs élémentaires organisés selon au moins une matrice triangulaire, la présente invention permet de réduire la complexité du nombre de commutateurs à implémenter.

Dans le cas d'une matrice carrée où N=P, la complexité en nombre de commutateurs élémentaires est ramenée à N(N+1)/2.

Du fait de l'absence de commutateurs élémentaires aux intersections ligne-colonne qui ne sont pas situées au sein d'une telle au moins une matrice triangulaire, le dispositif de l'invention permet une réduction significative de la consommation du commutateur à barres croisées.

Pour parvenir au résultat recherché, il est proposé un processeur de télécommunication comprenant un dispositif d'interconnexion non bloquant reconfigurable, configuré pour recevoir sur des entrées des signaux issus d'une ou plusieurs antennes en réception et délivrer via des sorties lesdits signaux vers une ou plusieurs antennes en émission. Le dispositif d'interconnexion comprend un commutateur à barres croisées formant un réseau à deux dimensions de N lignes et de P colonnes, les entrées du commutateur à barres croisées étant situées suivant une première dimension du réseau, les sorties du commutateur à barres croisées étant situées suivant une deuxième dimension du réseau. Le commutateur à barres croisées comprend un nombre de commutateurs élémentaires inférieur au nombre d'intersections ligne-colonne du réseau à deux dimensions, pour router lesdits signaux des entrées vers les sorties. Les commutateurs élémentaires sont agencés sur le réseau à des intersections ligne-colonne pour former au moins une matrice triangulaire, tel que toutes les intersections ligne-colonne dans ladite au moins une matrice triangulaire comportent un commutateur élémentaire pouvant être activé, et tel que tout ou partie des intersections ligne-colonne situées en dehors de ladite au moins une matrice triangulaire ne comportent pas de commutateur élémentaire.

Le dispositif peut être implémenté selon des mode de réalisation alternatifs ou combinés.

Dans un mode de réalisation, le dispositif d'interconnexion est couplé à un dispositif de permutation permettant de permuter les signaux en entrée ou en sortie de ladite au moins une matrice triangulaire.

Dans un mode de réalisation, le processeur de télécommunication comprend des formateurs de faisceau en réception associés à des lois de formation de faisceau, et le dispositif de permutation est configuré pour permuter une ou plusieurs lois de formation de faisceau entre les formateurs de faisceau, de manière à permuter les signaux en amont de ladite au moins une matrice triangulaire, en fonction du besoin de routage entre les signaux en amont et les signaux en aval du dispositif d'interconnexion configurable.

Dans un mode de réalisation, le processeur de télécommunication comprend des formateurs de faisceau en émission associés à des lois de formation de faisceau, et le dispositif de permutation est configuré pour permuter une ou plusieurs lois de formation de faisceau entre les formateurs de faisceau, de manière à permuter lesdits signaux en aval de ladite au moins une matrice triangulaire, en fonction du besoin de routage entre les signaux en amont et les signaux en aval du dispositif d'interconnexion configurable.

Dans un mode de réalisation, le réseau à deux dimensions de N lignes et de P colonnes forme un réseau matriciel carré avec N=P ou forme un réseau matriciel rectangulaire avec N ≠ P.

Dans un mode de réalisation, les commutateurs élémentaires formant au moins une matrice triangulaire sont des commutateurs 1x1 ou des commutateurs 2x1.

Dans un mode de réalisation, les commutateurs élémentaires formant au moins une matrice triangulaire sont des commutateurs 2X2 configurés pour interconnecter sélectivement une première entrée suivant la première dimension ou une deuxième entrée suivant la deuxième dimension avec une première sortie suivant la première dimension et de manière indépendante avec une deuxième sortie suivant la deuxième dimension.

Dans un mode de réalisation, les commutateurs élémentaires sur la diagonale de ladite au moins une matrice triangulaire sont connectés successivement entre eux, par connexion de la sortie ligne de chaque commutateur sur l'entrée colonne du commutateur suivant sur la diagonale.

Dans un mode de réalisation, le dispositif de permutation comprend un commutateur connecté en amont du commutateur à barres croisées, ledit commutateur étant configuré pour répartir lesdits signaux entre les entrées du commutateur à barres croisées en fonction du besoin de routage entre les signaux en amont et les signaux en aval du dispositif d'interconnexion configurable.

L'invention concerne aussi des procédés.

Dans un mode de réalisation, l'invention concerne un procédé de configuration d'un processeur de télécommunication qui comprend, pour un routage de signaux, des étapes consistant à :

déterminer un ensemble de couples (i, j) correspondant à un besoin de routage entre des signaux en amont et des signaux en aval du dispositif d'interconnexion, en considérant toutes les intersections ligne-colonne du réseau du commutateur à barres croisées ;

déterminer des commutateurs élémentaires de ladite au moins une matrice triangulaire à activer pour ledit routage, ladite étape consistant à :

  i. organiser lesdits couples (i, j) en groupes de rang ayant un même rang suivant la première dimension ;
  ii. déterminer dans chaque groupe de rang, un rang extremum suivant la deuxième dimension ;
  iii. ordonner lesdits groupes de rang selon leur rang extremum suivant la deuxième dimension ;
  iv. allouer successivement à chaque groupe de rang, un rang suivant la première dimension du réseau en suivant l'ordre obtenu à l'issu dudit ordonnancement, et en commençant par le rang suivant la première dimension formant un côté de la matrice triangulaire ;
  v. pour chaque groupe de rang, transposer chaque couple (i, j) en couple (rang alloué, j), et activer le commutateur élémentaire dudit couple(rang alloué, j) ;

- permuter les signaux en entrée du commutateur à barres croisées, en correspondance avec l'allocation de rang.

Dans un mode de réalisation, l'étape de déterminer les commutateurs élémentaires à activer consiste à :

  i. organiser lesdits couples (i, j) en groupes de rang ayant un même rang suivant la première dimension ;
  ii. déterminer dans chaque groupe de rang, un rang minimal suivant la deuxième dimension ;
  iii. ordonner lesdits groupes de rang par ordre croissant du rang minimal suivant la deuxième dimension.

Dans un mode de réalisation, l'étape de déterminer les commutateurs élémentaires à activer consiste à :

  i. organiser lesdits couples (i, j) en groupes de rang ayant un même rang suivant la première dimension ;
  ii. déterminer dans chaque groupe de rang, un rang maximal suivant la deuxième dimension ;
  iii. ordonner lesdits groupes de rang par ordre décroissant du rang maximal suivant la deuxième dimension.

Dans un mode de réalisation, l'invention concerne un procédé de configuration d'un processeur de télécommunication qui comprend, pour un routage de signaux, des étapes consistant à :

  déterminer un ensemble de couples (i, j) correspondant à un besoin de routage entre des signaux en amont et des signaux en aval du dispositif d'interconnexion, en considérant toutes les intersections ligne-colonne du réseau du commutateur à barres croisées ;

déterminer des commutateurs élémentaires de ladite au moins une matrice triangulaire à activer pour ledit routage, ladite étape consistant à :

  i. organiser lesdits couples (i, j) en groupes de rang ayant un même rang suivant la première dimension ;
  ii. ordonner lesdits groupes de rang selon leur rang suivant la première dimension ;
  iii. allouer successivement à chaque groupe de rang, un rang suivant la deuxième dimension du réseau, et en commençant par le rang suivant la deuxième dimension formant un côté de la matrice triangulaire ;
  iv. dans chaque groupe de rang, transposer pour chaque couple, un couple (i, j) en couple (i, rang alloué), activer le commutateur élémentaire du couple (i, rang alloué), et mémoriser le rang j suivant la deuxième dimension pour le rang alloué ;

- sommer les lois de formations de faisceaux correspondant aux rangs suivant la deuxième dimension mémorisés pour un même rang alloué associé à un formateur de faisceau en émission ;
- permuter les signaux de sortie des formateurs de faisceaux en aval du commutateur à barres croisées, en permutant l'affectation des lois sur les formateurs de faisceaux, en correspondance avec l'allocation de rang.

Dans un mode de réalisation, l'étape de déterminer les commutateurs élémentaires à activer consiste à :

  i. organiser lesdits couples (i, j) en groupes de rang ayant un même rang suivant la première dimension ;
  ii. ordonner lesdits groupes de rang par ordre croissant du rang suivant la première dimension.

Dans un mode de réalisation, l'étape de déterminer les commutateurs élémentaires à activer consiste à :

  i. organiser lesdits couples (i, j) en groupes de rang ayant un même rang suivant la première dimension ;
  ii. ordonner lesdits groupes de rang par ordre décroissant du rang suivant la première dimension.

D'autres caractéristiques et avantages de la présente invention apparaîtront mieux à la lecture de la description qui suit en relation aux figures annexées suivantes :

[Fig. 1] : la figure 1 déjà décrite, représente un processeur de télécommunication selon l'art antérieur ;

[Fig. 2] : la figure 2 déjà décrite, représente un commutateur à barres croisées selon l'art antérieur ;

[Fig. 3] : la figure 3 déjà décrite, représente un commutateur à barres croisées selon l'art antérieur comprenant des interrupteurs 1X1 ;

[Fig. 4] : la figure 4 déjà décrite, représente un commutateur à barres croisées selon l'art antérieur comprenant des interrupteurs 2X1 ;

[Fig. 5] : la figure 5, représente des architectures d'un commutateur à barres croisées d'un dispositif d'interconnexion reconfigurable dans un processeur selon l'invention ;

[Fig. 6] : la figure 6 illustre un premier exemple de procédé de configuration d'un processeur de télécommunication selon l'invention ;

[Fig. 7] : la figure 7 illustre un deuxième exemple de procédé de configuration d'un processeur de télécommunication selon l'invention ;

[Fig. 8] : la figure 8 illustre un troisième exemple de procédé de configuration d'un processeur de télécommunication selon l'invention ;

[Fig. 9] : la figure 9 illustre un quatrième exemple de procédé de configuration d'un processeur de télécommunication selon l'invention ;

[Fig. 10] : la figure 10 illustre un cinquième exemple de procédé de configuration d'un processeur de télécommunication selon l'invention ;

[Fig. 11] : la figure 11 illustre un sixième exemple de procédé de configuration d'un processeur de télécommunication selon l'invention ;

[Fig. 12] : la figure 12 illustre un septième exemple de procédé de configuration d'un processeur de télécommunication selon l'invention ;

[Fig. 13] : la figure 13 illustre un huitième exemple de procédé de configuration d'un processeur de télécommunication selon l'invention ;

[Fig. 14] : la figure 14 illustre un neuvième exemple de procédé de configuration d'un processeur de télécommunication selon l'invention ;

[Fig. 15] : la figure 15 illustre un dixième exemple de procédé de configuration d'un processeur de télécommunication selon l'invention ;

[Fig. 16] : la figure 16 illustre un onzième exemple de procédé de configuration d'un processeur de télécommunication selon l'invention ;

[Fig. 17] : la figure 17 illustre une variante d'un premier mode de réalisation d'un processeur de télécommunication selon l'invention ;

[Fig. 18] : la figure 18 illustre un deuxième mode de réalisation d'un processeur de télécommunication selon l'invention ;

[Fig. 19] : la figure 19 détaille le deuxième mode de réalisation d'un processeur de télécommunication selon l'invention ;

[Fig. 20] : la figure 20 illustre un exemple de réseau de Clos dans un troisième mode de réalisation d'un processeur de télécommunication selon l'invention ;

[Fig. 21] : la figure 21 illustre un autre exemple de réseau de Clos dans le troisième mode de réalisation d'un processeur de télécommunication selon l'invention ;

[Fig. 22] : la figure 22 illustre un exemple de processeur de télécommunication selon l'invention ;

[Fig. 23] : la figure 23 illustre un autre exemple de processeur de télécommunication selon l'invention ;

[Fig. 24] : la figure 24 illustre encore un autre exemple de processeur de télécommunication selon l'invention ;

[Fig. 25a] : la figure 25a illustre un cas général de permutations en amont du réseau matriciel selon l'invention ;

[Fig. 25b] : la figure 25b illustre un cas général de permutations en aval du réseau matriciel selon l'invention ;

[Fig. 26] : la figure 26 illustre un exemple de permutations en aval du réseau matriciel selon l'invention.

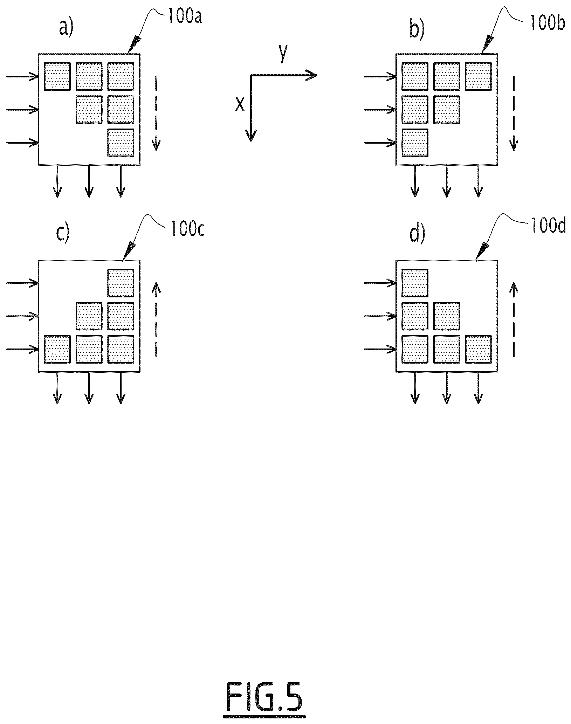

La figure 5 illustre des exemples de commutateurs à barres croisées (100a, 100b, 100c ou 100d) pour un dispositif d'interconnexion reconfigurable d'un processeur de télécommunication selon l'invention, dans un exemple particulier de commutateurs de type matrice carrée. Le processeur de télécommunication est typiquement réalisé par exemple avec un ensemble de circuits intégrés électroniques interconnectés et répartis sur un ensemble de circuits imprimés. Le dispositif d'interconnexion reconfigurable reçoit des signaux correspondant à des sous-bandes de fréquences qui sont issus d'une ou plusieurs antennes en réception, et il délivre les signaux vers une ou plusieurs antennes en émission.

Le commutateur à barres croisées (100a, 100b, 100c ou 100d) forme un réseau carré comportant des lignes et des colonnes. D'une manière générique, un commutateur à barres croisées selon l'invention sera référencé 100. Des commutateurs élémentaires situés à des intersections ligne-colonne du réseau connectent des lignes et des colonnes. L'agencement des commutateurs élémentaires composant le commutateur à barres croisées selon l'invention forme une matrice triangulaire.

Par matrice triangulaire, on désigne un agencement de commutateurs élémentaires notamment situés sur une diagonale et un côté de la diagonale du réseau. La diagonale du réseau peut être celle joignant un coin supérieur gauche du réseau avec un coin inférieur droit du réseau (illustré par 100a, 100d), encore appelée « diagonale principale » ; ou celle joignant un coin supérieur droit du réseau avec un coin inférieur droit du réseau (illustré par 100b, 100c), encore appelée « antidiagonale ». Avantageusement, selon l'agencement du dispositif de l'invention, toutes les intersections ligne-colonne de la matrice triangulaire comportent un commutateur élémentaire qui peut être rendu actif pour router des signaux.

Les entrées du commutateur à barres croisées 100a, 100b, 100c, 100d sont situées suivant une première dimension X du réseau de lignes et de colonnes. Les sorties du commutateur à barres croisées 100a, 100b, 100c, 100d sont situées suivant une deuxième dimension Y du réseau de lignes et de colonnes. Dans les figures illustrant les exemples selon l'invention, la première dimension X est celle le long de laquelle les lignes sont positionnées, et la deuxième direction Y est celle le long de laquelle les colonnes sont positionnées. Autrement dit, les entrées sont sur les lignes et les sorties sont sur les colonnes. Cependant, l'inverse est possible. En outre, sur les figures, les entrées du commutateur à barres croisées sont situées le long d'un côté gauche du réseau carré ; et les sorties du commutateur à barres croisées sont situées le long d'un côté inférieur du réseau carré. Cependant, les entrées et sorties pourraient être positionnées sur d'autres côtés du réseau carré. Les caractéristiques d'autres exemples de l'invention, dans lesquels, par rapport aux figures, la première dimension et la deuxième dimension sont différentes et/ou les entrées et sorties sont situés sur d'autres côtés du réseau, peuvent être facilement déduites sur la base de la présente description.

Dans une première architecture 100a illustrée sur la vue a) de la figure 5, les commutateurs élémentaires forment une matrice triangulaire supérieure suivant la diagonale principale, les entrées du commutateur à barres croisées s'étendant le long du côté gauche du réseau carré et les sorties du commutateur à barres croisées s'étendant suivant le côté inférieur du réseau carré.

Dans une deuxième architecture 100b illustrée sur la vue b) de la figure 5, les commutateurs élémentaires forment une matrice triangulaire supérieure suivant l'antidiagonale, les entrées du commutateur à barres croisées s'étendant le long d'un côté gauche du réseau carré et les sorties du commutateur à barres croisées s'étendant suivant un côté inférieur du réseau carré.

Dans une troisième architecture 100c illustrée sur la vue c) de la figure 5, les commutateurs élémentaires forment une matrice triangulaire inférieure suivant l'antidiagonale, les entrées du commutateur à barres croisées s'étendant le long d'un côté gauche du réseau carré et les sorties du commutateur à barres croisées s'étendant suivant un côté inférieur du réseau carré.

Dans une quatrième architecture 100d illustrée sur la vue d) de la figure 5, les commutateurs élémentaires forment une matrice triangulaire inférieure suivant la diagonale principale, les entrées du commutateur à barres croisées s'étendant le long d'un côté gauche du réseau carré et les sorties du commutateur à barres croisées s'étendant suivant un côté inférieur du réseau carré.

Dans une connexion entre ses entrées et ses sorties, le commutateur à barres croisées 100a, 100b, 100c, 100d n'utilise que les commutateurs élémentaires situés aux intersections ligne-colonne du réseau formant une matrice triangulaire. Les autres intersections du réseau de lignes et de colonnes peuvent alors être dépourvues de commutateurs élémentaires, ce qui facilite l'implémentation du commutateur à barres croisées. En outre, la réduction du nombre de commutateurs élémentaires par rapport à l'art antérieur et, en conséquence, la diminution du nombre de liens de communication au sein du commutateur à barres croisées, permet de réduire la consommation de celui-ci par rapport à l'art antérieur.

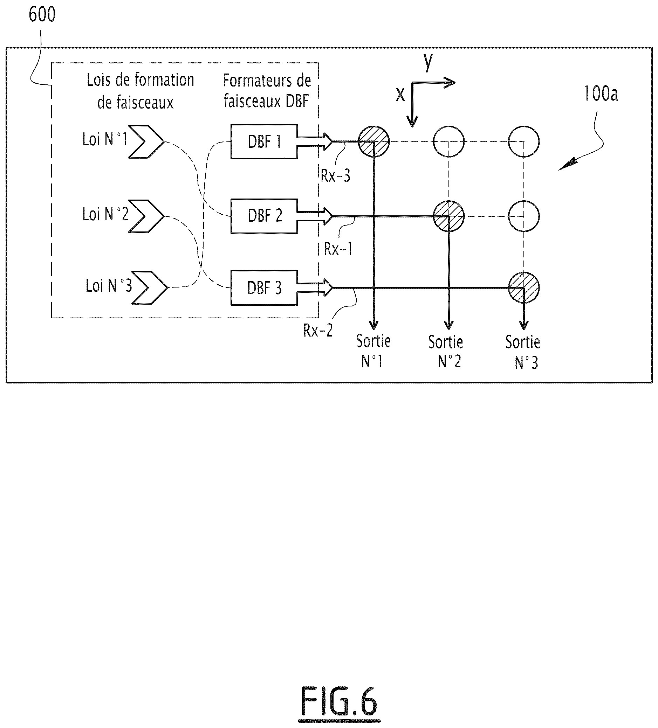

Dans un premier mode de réalisation illustré en figures 6 à 17, le caractère non bloquant du commutateur à barres croisées est obtenu grâce à un dispositif de permutation couplé au commutateur 100. En fonction d'une configuration donnée des connexions à réaliser entre les signaux en amont et les signaux en aval du commutateur à barres croisées, le dispositif de permutation, noté généralement 600, permet de permuter les lois de formation des faisceaux. Les permutations peuvent être réalisées soit en amont du réseau matriciel triangulaire, soit en aval. Ainsi, le dispositif de permutation 600 permet d'ajuster le besoin de routage au sein du commutateur à barres croisées pour ne mobiliser que des commutateurs élémentaires au sein d'un assemblage triangulaire fixe, relaxant ainsi le nombre requis de commutateurs élémentaires. L'agencement des commutateurs élémentaires en matrice triangulaire associé au dispositif de permutation assure un caractère non bloquant du commutateur à barres croisées selon le premier mode de réalisation, ainsi que la possibilité pour celui-ci d'assurer des connexions unicast et multicast.

Dans une première variante du premier mode de réalisation illustrée en figures 6 à 16, le dispositif de permutation 600 comprend des formateurs de faisceau en réception DBF (pour « Digital Beam Former » en anglais). Les formateurs de faisceau DBF en réception sont situés en amont du dispositif d'interconnexion reconfigurable, et donc du commutateur à barres croisées 100a, 100b, 100c, 100d. De manière connue en soi, chaque formateur de faisceau DBF1, DBF2, DBF3 produit un des signaux Rx-1, Rx-2, Rx-3 à partir des signaux issus des antennes élémentaires de l'antenne réseau en réception, en fonction d'une loi de formation de faisceau. Les signaux Rx-1, Rx-2, Rx-3 correspondent aux signaux radiofréquence reçus dans les directions des faisceaux définies par les lois de formation Loi N°1, Loi N°2, Loi N°3, configurées dans les formateurs, qui doivent ensuite être émis par une ou des antennes d'émission.

Dans cette première variante du premier mode de réalisation, les lois de formation de faisceau peuvent être permutées en fonction de la configuration des connexions à établir entre les signaux en amont et en aval du commutateur à barres croisées 100a, 100b, 100c, 100d. Ainsi, un routage des signaux, notamment des faisceaux, à travers le commutateur à barres croisées 100a, 100b, 100c, 100d peut être obtenu en activant les commutateurs élémentaires selon une configuration adaptée aux contraintes de l'agencement triangulaire des commutateurs élémentaires, puis en permutant les lois de formation de faisceau de manière à modifier la répartition des signaux Rx-1, Rx-2, Rx-3 entre les entrées du commutateur à barres croisées. Selon cette première variante, on utilise les formateurs de faisceaux en réception, présents par ailleurs dans le processeur de télécommunication, en tant que dispositif de permutation. Cela permet d'optimiser les ressources de commutation dans le processeur de télécommunication.

Les figures 6 à 10 représentent des exemples de procédé de configuration d'un processeur selon la première variante du premier mode de réalisation avec la première architecture 100a. En particulier, un premier formateur de faisceau DBF1 est connecté à une première entrée du réseau du commutateur à barres croisées 100a ; un deuxième formateur de faisceau DBF2 est connecté à une deuxième entrée du réseau du commutateur à barres croisées 100a ; un troisième formateur de faisceau DBF3 est connecté à une troisième entrée du réseau du commutateur à barres croisées 100a.

Dans un premier exemple de procédé illustré en figure 6 :

- un premier faisceau Rx-1 formé par une première loi de formation Loi N°1 doit être routé vers une deuxième sortie du commutateur à barres croisées 100a situé sur la deuxième colonne ;
- un deuxième faisceau Rx-2 formé par une deuxième loi de formation Loi N°2 doit être routé vers la troisième sortie située sur la troisième colonne du commutateur à barres croisées 100a ;
- un troisième faisceau Rx-3 formé par une troisième loi de formation Loi N°3 doit être routé vers une première sortie du commutateur à barres croisées 100a située sur la première colonne du commutateur à barres croisées 100a.

En particulier, initialement et arbitrairement:

- la première loi est assignée au premier formateur de faisceau DBF1 ;
- la deuxième loi est assignée au deuxième formateur de faisceau DBF2 ; et
- la troisième loi est assignée au troisième formateur de faisceau DBF3.

Dans une première étape, le procédé permet de déterminer un ensemble de couples (ligne, colonne) qui correspondent au besoin de routage défini entre les signaux en amont et les signaux en aval du dispositif d'interconnexion. Dans cette étape, on considère toutes les intersections ligne-colonne du réseau 100. Autrement dit, toutes les intersections du réseau sont prises en compte pour identifier le besoin de routage des faisceaux à réaliser, y compris les intersections du réseau qui sont dépourvues de commutateur élémentaire.

Ainsi, dans l'exemple illustré en figure 6 :

- le couple (1,2) désigne un besoin de routage du premier faisceau Rx-1 vers la deuxième sortie du commutateur à barres croisées 100a ;
- le couple (2,3) désigne un besoin de routage du deuxième faisceau Rx-2 vers la troisième sortie du commutateur à barres croisées 100a ;
- le couple (3,1) désigne un besoin de routage du troisième faisceau Rx-3 vers la première sortie du commutateur à barres croisées 100a.

Dans une seconde étape, le procédé permet de déterminer les commutateurs élémentaires à activer compte tenu des contraintes sur les sorties. Cette étape comprend d'abord l'organisation des couples (ligne, colonne) en groupes ayant un même rang suivant la première dimension X du réseau, c'est-à-dire suivant la dimension du réseau le long de laquelle les entrées sont positionnées. En particulier, sur les figures, la première dimension X est celle le long de laquelle les lignes d'entrée sont positionnées. Ainsi, les groupes de rang de ligne suivants sont identifiés :

- groupe 1 correspondant au rang de ligne 1 : {(1,2)} ;
- groupe 2 correspondant au rang de ligne 2 : {(2,3)} ;
- groupe 3 correspondant au rang de ligne 3 : {(3,1)}.

Puis, dans chaque groupe, le procédé permet de déterminer un rang de colonne extremum. Le rang extremum est notamment un rang extrême, c'est-à-dire un rang minimal ou maximal suivant l'architecture 100a, 100b, 100c, 100d du réseau.

En particulier, pour le commutateur à barres croisées selon la première architecture 100a, le rang extremum correspond au rang minimal. Ainsi, en faisant référence à la figure 6, le rang minimal de colonne pour le groupe 1 est le rang de colonne 2 ; le rang minimal de colonne pour le groupe 2 est le rang de colonne 3 ; le rang minimal de colonne pour le groupe 3 est le rang de colonne 1.

Puis les groupes de rang de ligne 1, 2, 3 sont ordonnés selon leur rang de colonne extremum suivant la deuxième dimension Y. En particulier, pour le commutateur à barres croisées selon la première architecture 100a, les groupes 1, 2, 3 sont ordonnés par ordre croissant du rang minimal. Notamment, en faisant référence à la figure 6, les groupes de rang de ligne 1, 2, 3 sont ordonnés comme suit {groupe 3, groupe 1, groupe 2}, c'est-à-dire { { (3, 1) }, { (1,2) }, { (2, 3) 1 }.

Ensuite, à chaque groupe de rang de ligne 3, 1, 2, le procédé permet d'allouer successivement un rang (rang alloué) suivant la première dimension X, en commençant par le rang suivant la première dimension X formant un côté de la matrice triangulaire. Sur la figure 6, le rang suivant la première dimension X formant un côté de la matrice triangulaire est le rang de ligne 1 situé sur le côté supérieur de la matrice triangulaire.

Ainsi de manière générale pour des permutations en amont du commutateur à barres croisées, pour le type d'assemblage selon une matrice triangulaire 100a, le classement des groupes de rang de première dimension X (ligne) est fait par ordre décroissant du rang extremum de deuxième dimension Y; le rang extremum de deuxième dimension Y (colonne) est minimal et l'allocation de rang de première dimension X (ligne) est croissante.

Selon les mêmes principes, l'homme du métier pourra adapter les classements pour les autres types d'assemblage comme suit :

Pour un type d'assemblage selon une matrice triangulaire 100b, le classement des groupes de rang de première dimension X (ligne) est réalisé par ordre décroissant du rang extremum de deuxième dimension Y; le rang extremum de deuxième dimension Y (colonne) est maximal et l'allocation de rang de première dimension X (ligne) est alors croissante.

Pour un type d'assemblage selon une matrice triangulaire 100c, le classement des groupes de rang de première dimension X (ligne) est réalisé par ordre croissant du rang extremum de deuxième dimension Y; le rang extremum de deuxième dimension Y (colonne) est minimal et l'allocation de rang de première dimension X (ligne) est alors décroissante.

Pour un type d'assemblage selon une matrice triangulaire 100d, le classement des groupes de rang de première dimension X (ligne) est réalisé par ordre décroissant du rang extremum de deuxième dimension Y; le rang extremum de deuxième dimension Y (colonne) est maximal et l'allocation de rang de première dimension X (ligne) est alors décroissante.

Dans un mode de réalisation, pour le cas d'une matrice triangulaire 100a, un compteur i de rang suivant la première dimension X est initialisé à 1, puis incrémenté progressivement à chaque allocation de groupe de rang 3, 1, 2. En particulier, une première table mémorise les correspondances entre les index des lois de formation de faisceau et les index des formateurs de faisceaux DBF. Une deuxième table mémorise l'activation des commutateurs élémentaires pour l'ensemble des connexions à établir. Les deux tables sont initialisées vides au début du calcul de toute nouvelle configuration du dispositif d'interconnexion.

Ainsi, en figure 6, pour i=1, la première ligne du commutateur est allouée au groupe de rang 3 qui est destiné à router le troisième faisceau RX-3. En parallèle, la première table mémorise une correspondance entre la troisième loi de formation de faisceau et le formateur de faisceau connecté à la première ligne, à savoir le premier formateur de faisceau DBF1. La deuxième table d'activation des commutateurs est actualisée pour le groupe de rang 3 en substituant i=1 au rang de ligne 3 : {(3,1)} devenant {(1,1)} est enregistré dans la deuxième table.

Pour i=2, la deuxième ligne du commutateur est allouée au groupe de rang 1 qui est destiné à router le premier faisceau RX-1. En parallèle, la première table mémorise une correspondance entre la première loi de formation de faisceau et le formateur de faisceau connecté à la deuxième ligne, à savoir le deuxième formateur de faisceau DBF2. La deuxième table d'activation des commutateurs est actualisée pour le groupe de rang 1 en substituant i=2 au rang de ligne 1 : {(1,2)} devenant {(2,2)} est enregistré dans la deuxième table.

Pour i=3, la troisième ligne du commutateur est allouée au groupe de rang 2 qui est destiné à router le deuxième faisceau RX-2. En parallèle, la première table mémorise une correspondance entre la deuxième loi de formation de faisceau et le formateur de faisceau connecté à la troisième ligne, à savoir le troisième formateur de faisceau DBF3. La deuxième table d'activation des commutateurs est actualisée pour le groupe de rang 2 en substituant i=3 au rang de ligne 2 : {(2,3)} devenant {(3,3)} est enregistré dans la deuxième table.

Dans une troisième étape, le procédé permet que les signaux, représentant les faisceaux Rx-1, Rx-2, Rx-3, soient permutés en correspondance avec l'allocation de rang précédente. En particulier, les correspondances entre lois de formation de faisceau et formateurs de faisceaux mémorisées dans la première table sont utilisées pour permuter les lois de formation de faisceau assignées aux formateurs de faisceaux.

Ainsi, en figure 6, la première loi de formation de faisceau Loi N°1 est assignée au deuxième formateur de faisceau DBF2 ; la deuxième loi de formation de faisceau Loi N°2 est assignée au troisième formateur de faisceau DBF3 ; la troisième loi de formation de faisceau Loi N°3 est assignée au premier formateur de faisceau DBF1.

En figure 6, suite aux étapes précédentes, les commutateurs élémentaires situés aux intersections correspondant aux couples (ligne, colonne) (1,1), (2,2), (3,3) ont été identifiés dans la deuxième table d'activation pour implémenter le routage souhaité des faisceaux Rx-1, Rx-2, Rx-3 à travers le commutateur à barres croisées.

Les commutateurs élémentaires correspondants aux couples (rang alloué, colonne) peuvent alors être activés, c'est-à-dire mis dans un état passant, afin de router les faisceaux Rx-1, Rx-2, Rx-3 vers respectivement la deuxième sortie, la troisième sortie et la première sortie.

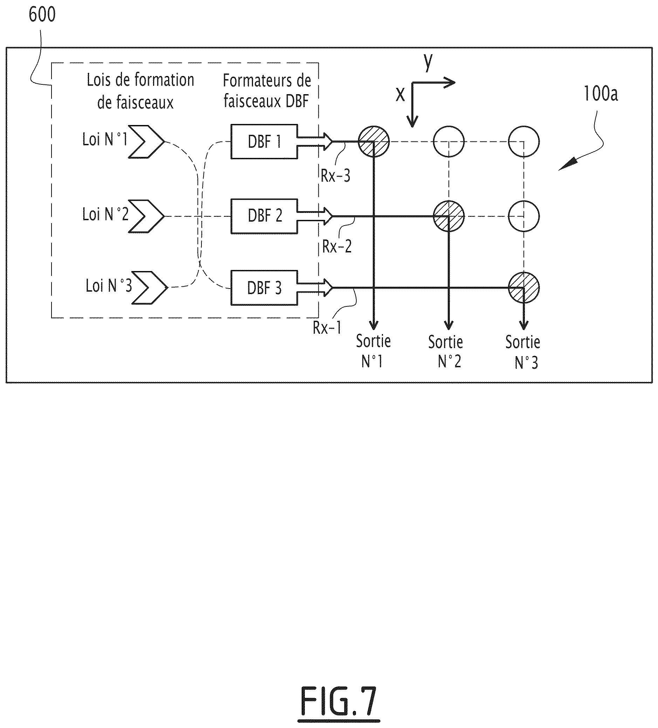

La figure 7 représente un deuxième exemple de procédé de configuration d'un processeur selon la première variante du premier mode de réalisation avec la première architecture 100a. Le deuxième exemple de procédé est identique au premier exemple illustré en figure 6, si ce n'est le routage des faisceaux à obtenir.

Ainsi, dans le deuxième exemple illustré en figure 7 :

- le premier faisceau Rx-1 formé par la première loi de formation Loi N°1 doit être routé vers la troisième sortie du commutateur à barres croisées 100a situé sur la troisième colonne ;
- le deuxième faisceau Rx-2 formé par la deuxième loi de formation Loi N°2 doit être routé vers la deuxième sortie située sur la deuxième colonne du commutateur à barres croisées 100a ;
- le troisième faisceau Rx-3 formé par la troisième loi de formation Loi N°3 doit être routé vers la première sortie du commutateur à barres croisées 100a située sur la première colonne du commutateur à barres croisées 100a.

A l'issue de la première étape, l'ensemble de couples (ligne, colonne) qui correspondent à des besoins de routage entre les signaux en amont et les signaux en aval du commutateur, en considérant toutes les intersections ligne-colonne du réseau, est déterminé comme étant le suivant :

- le couple (1,3) désigne un besoin de routage du premier faisceau Rx-1 vers la troisième sortie du commutateur à barres croisées 100a ;
- le couple (2,2) désigne un besoin de routage du deuxième faisceau Rx-2 vers la deuxième sortie du commutateur à barres croisées 100a ;
- le couple (3,1) désigne un besoin de routage du troisième faisceau Rx-3 vers la première sortie du commutateur à barres croisées 100a.

Dans la seconde étape, le procédé permet que les couples (ligne, colonne) ayant un même rang suivant la première dimension X du réseau soient organisés en groupes de rang X ou rang de ligne, et pour l'exemple de la figure 7 comme suit :

- groupe 1 correspondant au rang de ligne 1 : {(1,3)} ;
- groupe 2 correspondant au rang de ligne 2 : {(2,2)} ;
- groupe 3 correspondant au rang de ligne 3 : {(3,1)}.

Puis, dans chaque groupe, le procédé permet que le rang minimal suivant la deuxième dimension Y soit identifié, et pour l'exemple comme suit : le rang minimal pour le groupe 1 est le rang de colonne 3 ; le rang minimal pour le groupe 2 est le rang de colonne 2 ; le rang minimal pour le groupe 3 est le rang de colonne 1.

Puis dans l'étape suivante, les groupes de rang 1, 2, 3 sont ordonnés par ordre croissant du rang de colonne minimal, et pour l'exemple de la figure 7 comme suit : {groupe 3, groupe 2, groupe 1}, c'est-à-dire { { (3, 1) }, { (2, 2) }, { (1, 3) } }.

Ensuite, à chaque groupe de rang de ligne 3, 2, 1 le procédé permet d'allouer successivement un rang suivant la première dimension X, en commençant par le rang suivant la première dimension X formant un côté de la matrice triangulaire.

En particulier, en figure 7, pour i=1, la première ligne du commutateur est allouée au groupe 3 qui est destiné à router le troisième faisceau RX-3. En parallèle, la première table mémorise une correspondance entre la troisième loi de formation de faisceau et le formateur de faisceau connecté à la première ligne, à savoir le premier formateur de faisceau DBF1. La deuxième table d'activation des commutateurs est actualisée pour le groupe de rang 3 en substituant i=1 au rang de ligne 3 : {(3,1)} devenant {(1,1)} est enregistré dans la deuxième table.

Pour i=2, la deuxième ligne du commutateur est allouée au groupe 2 qui est destiné à router le deuxième faisceau RX-2. En parallèle, la première table mémorise une correspondance entre la deuxième loi de formation de faisceau et le formateur de faisceau connecté à la deuxième ligne, à savoir le deuxième formateur de faisceau DBF2. La deuxième table d'activation des commutateurs est actualisée pour le groupe de rang 2 en substituant i=2 au rang de ligne 2 : {(2,2)} devenant {(2,2)} est enregistré dans la deuxième table.

Pour i=3, la troisième ligne du commutateur est allouée au groupe 1 qui est destiné à router le premier faisceau RX-1. En parallèle, la première table mémorise une correspondance entre la première loi de formation de faisceau et le formateur de faisceau connecté à la troisième ligne, à savoir le troisième formateur de faisceau DBF3. La deuxième table d'activation des commutateurs est actualisée pour le groupe de rang 3 en substituant i=3 au rang de ligne 1 : {(1,3)} devenant {(3,3)} est enregistré dans la deuxième table.

Dans la troisième étape, les faisceaux Rx-1, Rx-2, Rx-3, sont permutés en correspondance avec l'allocation de rang précédente. Ainsi, en figure 7, la première loi de formation de faisceau est assignée au troisième formateur de faisceau DBF3 ; la deuxième loi de formation de faisceau reste assignée au deuxième formateur de faisceau DBF2 ; la troisième loi de formation de faisceau est assignée au premier formateur de faisceau DBF1.

Suite aux étapes précédentes, les commutateurs élémentaires situés aux intersections correspondant aux couples (ligne, colonne) (1,1), (2,2), (3,3) ont été identifiés dans la deuxième table d'activation pour implémenter le routage souhaité des faisceaux Rx-1, Rx-2, Rx-3 à travers le commutateur à barres croisées.

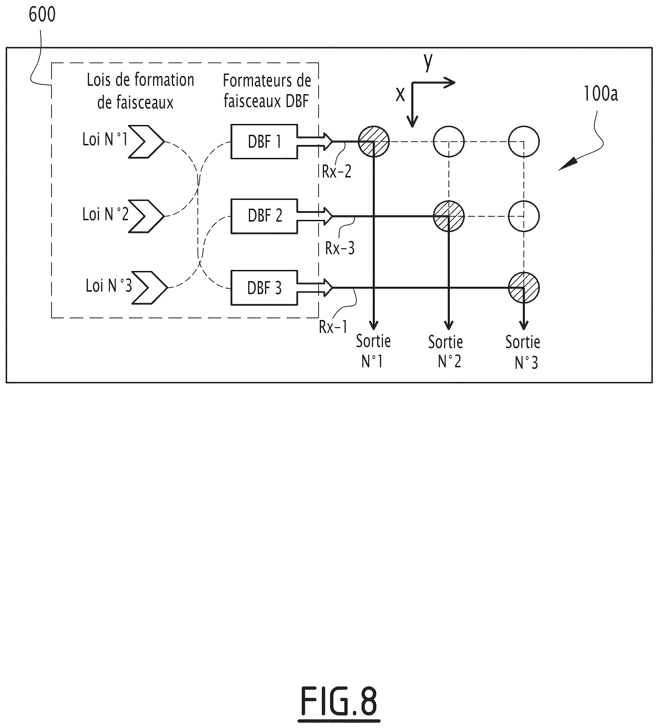

La figure 8 illustre un troisième exemple de procédé de configuration d'un processeur selon la première variante du premier mode de réalisation avec la première architecture 100a. Le troisième exemple de procédé est identique au premier exemple illustré en figure 6, si ce n'est le routage des faisceaux à obtenir.

Ainsi, dans le troisième exemple illustré en figure 8 :

- le premier faisceau Rx-1 formé par la première loi de formation Loi N°1 doit être routé vers la troisième sortie du commutateur à barres croisées 100a situé sur la troisième colonne ;
- le deuxième faisceau Rx-2 formé par la deuxième loi de formation Loi N°2 doit être routé vers la première sortie située sur la première colonne du commutateur à barres croisées 100a ;
- le troisième faisceau Rx-3 formé par la troisième loi de formation Loi N°3 doit être routé vers la deuxième sortie du commutateur à barres croisées 100a située sur la deuxième colonne du commutateur à barres croisées 100a.

A l'issue de la première étape, l'ensemble de couples (ligne, colonne) qui correspondent au besoin de routage entre les signaux en amont et les signaux en aval du commutateur, en considérant toutes les intersections ligne-colonne du réseau, est obtenu et pour l'exemple de la figure 8 est le suivant :

- le couple (1,3) désignant un besoin de routage du premier faisceau Rx-1 vers la troisième sortie du commutateur à barres croisées 100a ;
- le couple (2,1) désignant un besoin de routage du deuxième faisceau Rx-2 vers la première sortie du commutateur à barres croisées 100a ;
- le couple (3,2) désignant un besoin de routage du troisième faisceau Rx-3 vers la deuxième sortie du commutateur à barres croisées 100a.

Dans la seconde étape, les couples (ligne, colonne) ayant un même rang suivant la première dimension X du réseau sont regroupés comme suit :

- groupe 1 correspondant au rang de ligne 1 : {(1,3)} ;
- groupe 2 correspondant au rang de ligne 2 : {(2,1)} ;
- groupe 3 correspondant au rang de ligne 3 : {(3,2)}.

Puis, dans chaque groupe, le rang minimal suivant la deuxième dimension Y est identifié comme suit : le rang minimal pour le groupe 1 est le rang de colonne 3 ; le rang minimal pour le groupe 2 est le rang de colonne 1 ; le rang minimal pour le groupe 3 est le rang de colonne 2.

Puis les groupes 1, 2, 3 sont ordonnés par ordre croissant du rang de colonne minimal, comme suit : {groupe 2, groupe 3, groupe 1}, c'est-à-dire { {(2,1)}, {(3,2)}, {(1,3)} }.

Ensuite, à chaque groupe 2, 3, 1 est alloué successivement un rang suivant la première dimension X, en commençant par le rang suivant la première dimension X formant un côté de la matrice triangulaire.

En particulier, en figure 8, pour i=1, la première ligne du commutateur est allouée au groupe 2 qui est destiné à router le deuxième faisceau RX-2. En parallèle, la première table mémorise une correspondance entre la deuxième loi de formation de faisceau et le formateur de faisceau connecté à la première ligne, à savoir le premier formateur de faisceau DBF1. La deuxième table d'activation des commutateurs est actualisée pour le groupe de rang 2 en substituant i=1 au rang de ligne 2 : {(2,1)} devenant {(1,1)} est enregistré dans la deuxième table.

Pour i=2, la deuxième ligne du commutateur est allouée au groupe 3 qui est destiné à router le troisième faisceau RX-3. En parallèle, la première table mémorise une correspondance entre la troisième loi de formation de faisceau et le formateur de faisceau connecté à la deuxième ligne, à savoir le deuxième formateur de faisceau DBF2. La deuxième table d'activation des commutateurs est actualisée pour le groupe de rang 3 en substituant i=2 au rang de ligne 3 : {(3,2)} devenant {(2,2)} est enregistré dans la deuxième table.

Pour i=3, la troisième ligne du commutateur est allouée au groupe 1 qui est destiné à router le premier faisceau RX-1. En parallèle, la première table mémorise une correspondance entre la première loi de formation de faisceau et le formateur de faisceau connecté à la troisième ligne, à savoir le troisième formateur de faisceau DBF3. La deuxième table d'activation des commutateurs est actualisée pour le groupe de rang 1 en substituant i=3 au rang de ligne 1 : {(1,3)} devenant {(3,3)} est enregistré dans la deuxième table.

Dans la troisième étape, les lois de formation des faisceaux Rx-1, Rx-2, Rx-3, sont permutées en correspondance avec l'allocation de rang précédente. Ainsi, en figure 8, la première loi de formation de faisceau est assignée au troisième formateur de faisceau DBF3 ; la deuxième loi de formation de faisceau est assignée au premier formateur de faisceau DBF1 ; la troisième loi de formation de faisceau est assignée au deuxième formateur de faisceau DBF2.

Suite aux étapes précédentes, les commutateurs élémentaires situés aux intersections correspondant aux couples de lignes (1,1), (2,2), (3,3) ont été identifiés dans la deuxième table d'activation pour implémenter le routage souhaité des faisceaux Rx-1, Rx-2, Rx-3 à travers le commutateur à barres croisées.

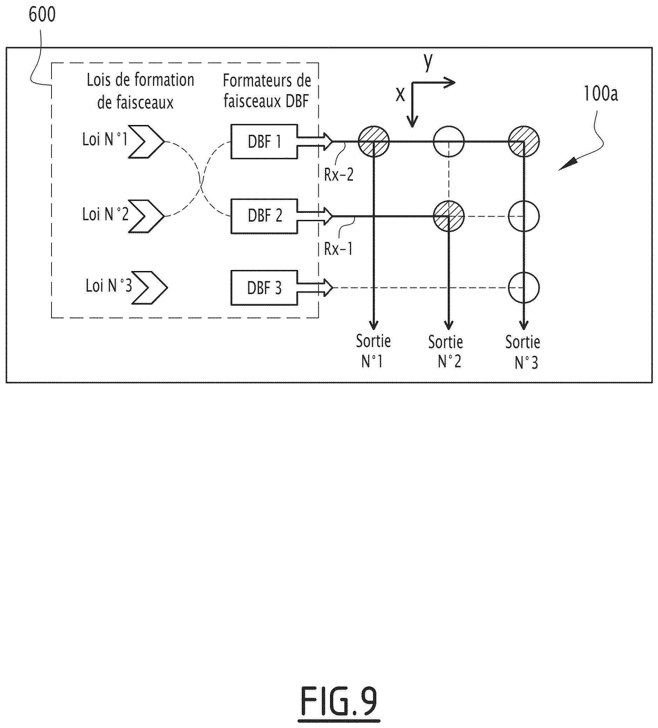

La figure 9 représente un quatrième exemple de procédé de configuration d'un processeur selon la première variante du premier mode de réalisation avec la première architecture 100a. Le quatrième exemple de procédé est identique au premier exemple illustré en figure 6, si ce n'est le routage des faisceaux à obtenir.

Ainsi, dans le quatrième exemple illustré en figure 9 :

- le premier faisceau Rx-1 formé par la première loi de formation Loi N°1 doit être routé vers la deuxième sortie du commutateur à barres croisées 100a située sur la deuxième colonne du commutateur à barres croisées 100a ;
- le deuxième faisceau Rx-2 formé par la deuxième loi de formation Loi N°2 doit être routé vers la première sortie située sur la première colonne du commutateur à barres croisées 100a et vers la troisième sortie du commutateur à barres croisées 100a situé sur la troisième colonne ;

A l'issue de la première étape, l'ensemble de couples (ligne, colonne) qui correspondent à des besoins de routage entre les signaux en amont et les signaux en aval du commutateur, en considérant toutes les intersections ligne-colonne du réseau, est le suivant :

- le couple (1,2) désignant un besoin de routage du premier faisceau Rx-1 vers la deuxième sortie du commutateur à barres croisées 100a ;
- le couple (2,1) désignant un besoin de routage du deuxième faisceau Rx-2 vers la première sortie du commutateur à barres croisées 100a ;

- le couple (2,3) désignant un besoin de routage du deuxième faisceau Rx-2 vers la troisième sortie du commutateur à barres croisées 100a.

Dans la seconde étape, les couples de ligne et de colonne ayant un même rang suivant la première dimension X du réseau sont regroupés comme suit :

- groupe 1 correspondant au rang de ligne 1 : { (1,2) } ;
- groupe 2 correspondant au rang de ligne 2 : { (2,1), (2,3) }.

Puis, dans chaque groupe, le rang minimal suivant la deuxième dimension Y est identifié comme suit : le rang minimal pour le groupe 1 est le rang de colonne 2 ; le rang minimal pour le groupe 2 est le rang de colonne 1.

Puis les groupes 1, 2 sont ordonnés par ordre croissant du rang minimal, comme suit : {groupe 2, groupe 1}, c'est-à-dire { { (2,1), (2,3) }, {(1,2)} }.

Ensuite, à chaque groupe 1, 2 est alloué successivement un rang suivant la première dimension X, en commençant par le rang suivant la première dimension X formant un côté de la matrice triangulaire.

En particulier, en figure 9, pour i=1, la première ligne est allouée au groupe 2 qui est destiné à router le deuxième faisceau RX-2. En parallèle, la première table mémorise une correspondance entre la deuxième loi de formation de faisceau et le formateur de faisceau connecté à la première ligne, à savoir le premier formateur de faisceau DBF1. La deuxième table d'activation des commutateurs est actualisée pour le groupe de rang 2 en substituant i=1 au rang de ligne 2 : {(2,1), (2,3)} devenant {(1,1), (1,3)} est enregistré dans la deuxième table.

Pour i=2, la deuxième ligne est allouée au groupe 1 qui est destiné à router le premier faisceau RX-1. En parallèle, la première table mémorise une correspondance entre la première loi de formation de faisceau et le formateur de faisceau connecté à la deuxième ligne, à savoir le deuxième formateur de faisceau DBF2. La deuxième table d'activation des commutateurs est actualisée pour le groupe de rang 1 en substituant i=2 au rang de ligne 1 : {(1,2)} devenant {(2,2)} est enregistré dans la deuxième table.

Dans la troisième étape, les faisceaux Rx-1, Rx-2 sont permutés en correspondance avec l'allocation de rang précédente. Ainsi, en figure 9, la première loi de formation de faisceau est assignée au deuxième formateur de faisceau DBF2 ; et la deuxième loi de formation de faisceau est assignée au premier formateur de faisceau DBF1.

Suite aux étapes précédentes, les commutateurs élémentaires situés aux intersections correspondant aux couples (ligne, colonne) (1,1), (1,3), (2,2) ont été identifiés dans la deuxième table d'activation pour implémenter le routage souhaité des faisceaux Rx-1, Rx-2 à travers le commutateur à barres croisées.

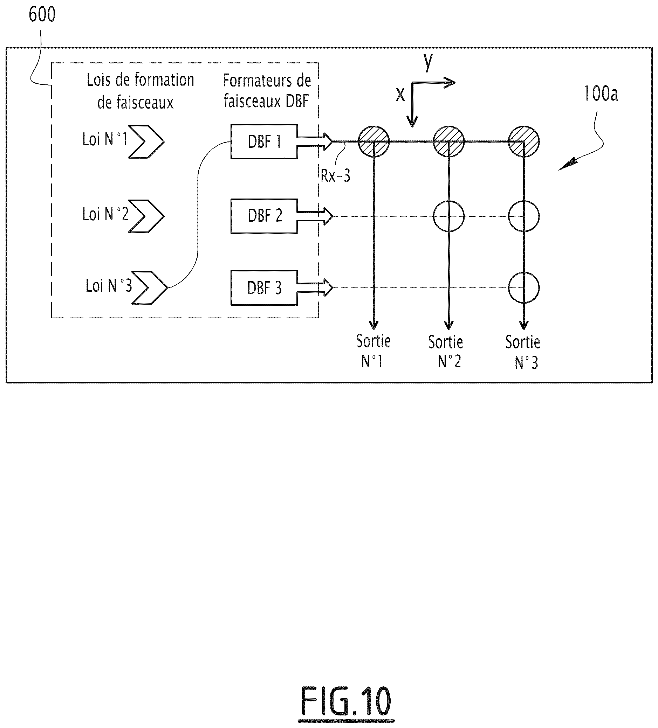

La figure 10 représente un cinquième exemple de procédé de configuration d'un processeur selon la première variante du premier mode de réalisation avec la première architecture 100a. Le cinquième exemple de procédé est identique au premier exemple illustré en figure 6, si ce n'est le routage des faisceaux à obtenir. Ainsi, dans le cinquième exemple illustré en figure 10, le troisième faisceau Rx-3 formé par la troisième loi doit être routé vers la première, la deuxième et la troisième sorties du commutateur à barres croisées 100a.

A l'issue de la première étape, l'ensemble de couples (ligne, colonne) qui correspondent à des besoins de routage entre les signaux en amont et les signaux en aval du commutateur, en considérant toutes les intersections ligne-colonne du réseau, est le suivant :

- le couple (3,1) désignant un besoin de routage du troisième faisceau Rx-3 vers la première sortie du commutateur à barres croisées 100a ;
- le couple (3,2) désignant un besoin de routage du troisième faisceau Rx-3 vers la deuxième sortie du commutateur à barres croisées 100a ;
- le couple (3,3) désignant un besoin de routage du troisième faisceau Rx-3 vers la troisième sortie du commutateur à barres croisées 100a.

Dans la seconde étape, les couples (ligne, colonne) ayant un même rang suivant la première dimension X du réseau sont regroupés comme suit : groupe 3 correspondant au rang de ligne 3 : {(3,1), (3,2), (3,3)}.

Puis, pour i=1, la première ligne est allouée au groupe 3 qui est destiné à router le troisième faisceau RX-3. En parallèle, la première table mémorise une correspondance entre la troisième loi de formation de faisceau et le formateur de faisceau connecté à la première ligne, à savoir le premier formateur de faisceau DBF1. La deuxième table d'activation des commutateurs est actualisée pour le groupe de rang 3 en substituant i=1 au rang de ligne 3 : {(3,1), (3,2), (3,3)} devenant {(1,1), (1,2), (1,3)} est enregistré dans la deuxième table. Dans la troisième étape, en figure 10, la troisième loi de formation de faisceau est assignée au premier formateur de faisceau DBF1.

Suite aux étapes précédentes, les commutateurs élémentaires situés aux intersections correspondant aux couples (ligne, colonne) (1,1), (1,2), (1,3) ont été identifiés dans la deuxième table d'activation pour implémenter le routage souhaité du faisceau Rx-3 à travers le commutateur à barres croisées.

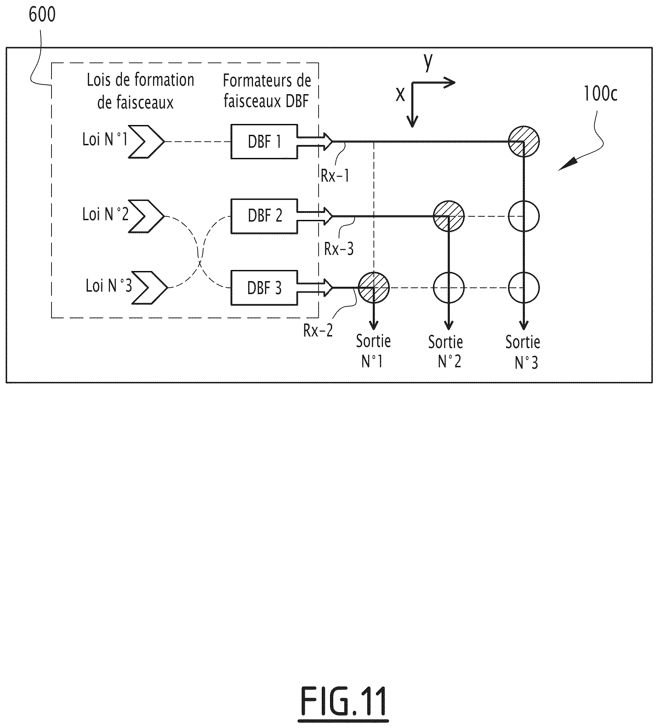

Comme l'illustre les figures 6 à 10, le procédé de reconfiguration selon l'invention permet donc d'obtenir une connexion unicast ou multicast dans un processeur selon la première variante du premier mode de réalisation avec la première architecture 100a. Les autres architectures 100b, 100c, 100d, permettent de même d'obtenir des connexions unicast ou multicast, comme cela est expliqué ci-après en relation avec les figures 11 à 16.

Notamment, dans la première variante du premier mode réalisation, la permutation des lois de formation de faisceau est fonction de la répartition initiale des lois de formation entre les formateurs de faisceaux DBF1, DBF2, DBF3.

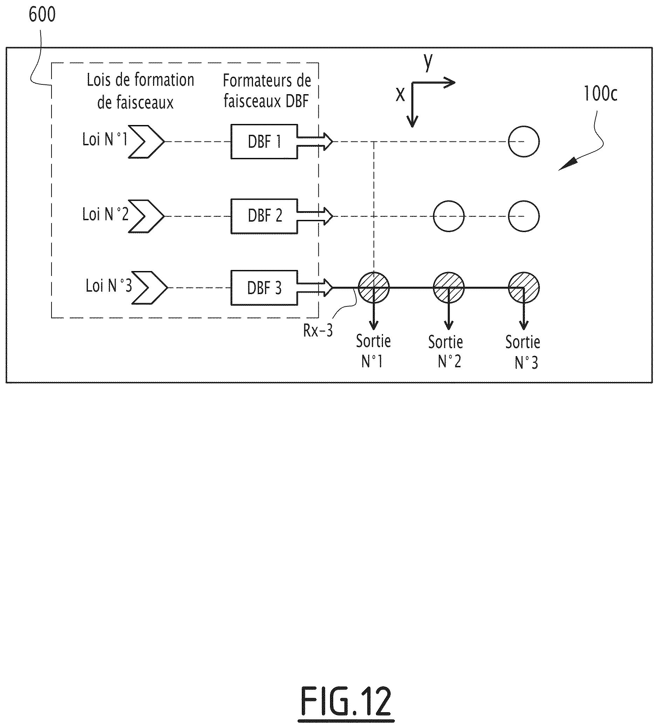

Les figures 11 et 12 représentent des exemples de procédé de configuration d'un processeur selon la première variante du premier mode de réalisation avec la troisième architecture 100c. Dans la première variante du premier mode de réalisation avec la troisième architecture 100c, le procédé de configuration est identique à celui pour la première variante du premier mode de réalisation avec la première architecture 100a, si ce n'est que l'ordre d'allocation de ligne par groupe est réalisé de manière décroissante à partir de la dernière ligne formant un côté de la matrice triangulaire.

En particulier, dans un sixième exemple de procédé illustré en figure 11, selon cette première variante du premier mode de réalisation avec la troisième architecture 100c, le routage à obtenir est identique à celui dans le troisième exemple illustré en figure 8, de même que la répartition initiale des lois de formation de faisceau dans les formateurs de faisceaux. Cependant, les commutateurs élémentaires à activer ne sont pas les mêmes car les architectures 100a, 100c sont différentes. Ainsi, en figure 11, les commutateurs élémentaires situés aux intersections correspondant aux couples (ligne, colonne) (1,3), (2,2), (3,1) sont identifiés pour implémenter le routage souhaité des faisceaux Rx-1, Rx-2, Rx-3 à travers le commutateur à barres croisées. La première loi de formation de faisceau reste assignée au premier formateur de faisceau DBF1 ; la deuxième loi de formation de faisceau est assignée au troisième formateur de faisceau DBF3 ; la troisième loi de formation de faisceau est assignée au deuxième formateur de faisceau DBF2.

Dans un septième exemple de procédé illustré en figure 12, selon cette première variante du premier mode de réalisation avec la troisième architecture 100c, le routage à obtenir est identique à celui du cinquième exemple illustré en figure 10 ; de même que la répartition initiale des lois de formation de faisceau dans les formateurs de faisceaux. Cependant, les commutateurs élémentaires à activer ne sont pas les mêmes car les architectures 100a, 100c sont différentes. Ainsi, en figure 12, les commutateurs élémentaires situés aux intersections correspondant aux couples (ligne, colonne) (3,1), (3,2), (3,3) sont identifiés pour implémenter le routage souhaité du faisceau Rx-3 à travers le commutateur à barres croisées. La troisième loi de formation de faisceau reste assignée au troisième formateur de faisceau DBF3.

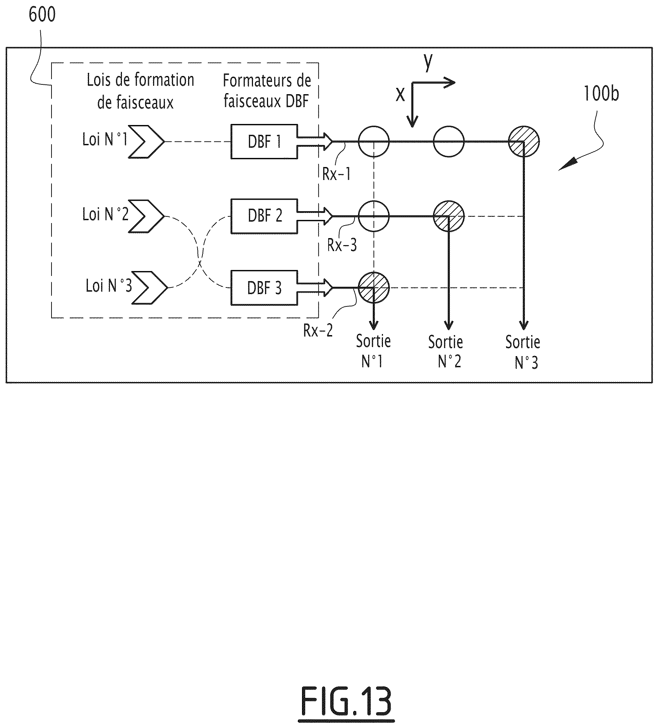

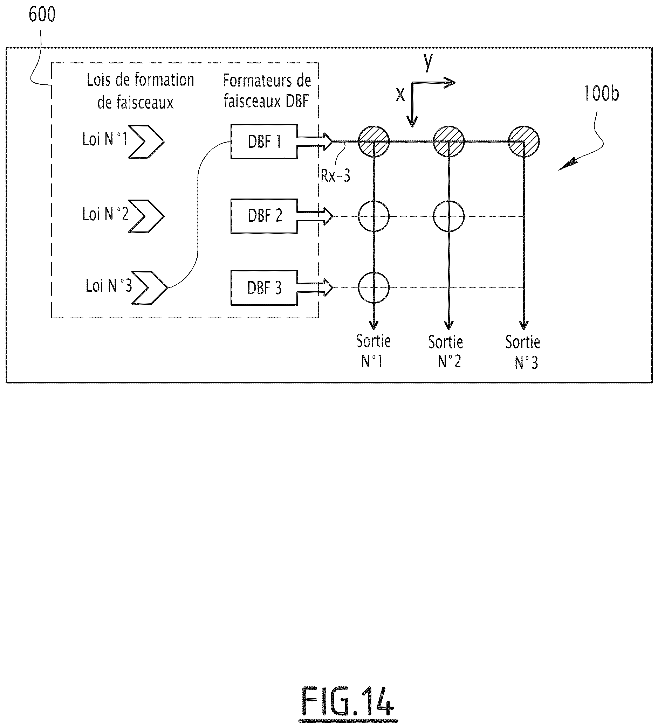

Les figures 13 et 14 représentent des exemples de procédé de configuration d'un processeur selon la première variante du premier mode de réalisation avec la deuxième architecture 100b. Dans la première variante du premier mode de réalisation avec la deuxième architecture 100b, le procédé de configuration est identique à celui pour la première variante du premier mode de réalisation avec la première architecture 100a, si ce n'est que la détermination d'un rang extremum suivant la deuxième dimension Y dans chaque groupe de couples correspond à la détermination, dans chaque groupe, du rang maximum suivant la deuxième dimension Y ; et l'ordonnancement des groupes de couples s'effectue par ordre décroissant du rang maximal suivant la deuxième dimension Y.

En particulier, dans un huitième exemple de procédé illustré en figure 13, selon cette première variante du premier mode de réalisation avec la deuxième architecture 100b, le routage à obtenir est identique à celui dans le troisième exemple illustré en figure 8 ; de même que la répartition initiale des lois de formation de faisceau dans les formateurs de faisceaux. En outre, les étapes de détermination des couples (ligne, colonne) correspondant à des chemins entre les entrées et les sorties, et l'organisation des couples (ligne, colonne) en groupes de rang ayant un même rang suivant la première dimension X sont identiques.

Dans le huitième exemple de procédé, les étapes de détermination d'un rang extremum suivant la deuxième dimension Y et d'ordonnancement des groupes de couples sont différentes comme suit. Dans chaque groupe, le rang maximal suivant la deuxième dimension Y est identifié comme suit : le rang maximal pour le groupe 1 est le rang de colonne 3 ; le rang maximal pour le groupe 2 est le rang de colonne 1 ; le rang maximal pour le groupe 3 est le rang de colonne 2. Puis les groupes 1, 2, 3 sont ordonnés par ordre décroissant du rang maximal, comme suit : { groupe 1, groupe 3, groupe 2 }, c'est-à-dire { {(1,3)}, {(3,2)}, {(2,1)} }.

Ensuite, l'étape d'allocation successive à chaque groupe d'un rang suivant la première dimension X reste identique à celle du troisième exemple illustré en figure 8. A chaque groupe 1, 3, 2 est alloué successivement un rang suivant la première dimension X, en commençant par le rang suivant la première dimension X formant un côté de la matrice triangulaire.

En particulier, en figure 13, pour i=1, la première ligne est allouée au groupe 1 qui est destiné à router le premier faisceau RX-1. En parallèle, la première table mémorise une correspondance entre la première loi de formation de faisceau et le formateur de faisceau connecté à la première ligne, à savoir le premier formateur de faisceau DBF1. La deuxième table d'activation des commutateurs est actualisée pour le groupe de rang 1 en substituant i=1 au rang de ligne 1 : {(1,3}} restant {(1,3)} est enregistré dans la deuxième table.

Pour i=2, la deuxième ligne est allouée au groupe 3 qui est destiné à router le troisième faisceau RX-3. En parallèle, la première table mémorise une correspondance entre la troisième loi de formation de faisceau et le formateur de faisceau connecté à la deuxième ligne, à savoir le deuxième formateur de faisceau DBF2. La deuxième table d'activation des commutateurs est actualisée pour le groupe de rang 3 en substituant i=2 au rang de ligne 3 : {(3,2)} devenant {(2,2)} est enregistré dans la deuxième table.

Pour i=3, la troisième ligne est allouée au groupe 2 qui est destiné à router le deuxième faisceau RX-2. En parallèle, la première table mémorise une correspondance entre la deuxième loi de formation de faisceau et le formateur de faisceau connecté à la troisième ligne, à savoir le troisième formateur de faisceau DBF3. La deuxième table d'activation des commutateurs est actualisée pour le groupe de rang 2 en substituant i=3 au rang de ligne 2 : {(2,1)} devenant {(3,1)} est enregistré dans la deuxième table.

Dans la troisième étape, les faisceaux Rx-1, Rx-2, Rx-3, sont permutés en correspondance avec l'allocation de rang précédente. Ainsi, en figure 13, la première loi de formation de faisceau reste dans le premier formateur de faisceau DBF1 ; la deuxième loi de formation de faisceau est assignée au troisième formateur de faisceau DBF3 ; la troisième loi de formation de faisceau est assignée au deuxième formateur de faisceau DBF2.

Suite aux étapes précédentes, les commutateurs élémentaires situés aux intersections correspondant aux couples (ligne, colonne) (1,3), (2,2), (3,1) ont été identifiés dans la deuxième table d'activation pour implémenter le routage souhaité des faisceaux Rx-1, Rx-2, Rx-3 à travers le commutateur à barres croisées.

Un neuvième exemple de procédé selon la première variante du premier mode de réalisation avec la deuxième architecture 100b est illustré en figure 14. Le neuvième exemple de procédé est identique au huitième exemple de procédé, si ce n'est le routage des faisceaux à obtenir qui est identique à celui du cinquième exemple illustré en figure 10. En appliquant les mêmes étapes que dans le huitième exemple de procédé, les commutateurs élémentaires situés aux intersections correspondant aux couples (ligne, colonne) (1,1), (1,2), (1,3) sont identifiés pour implémenter le routage souhaité des faisceaux Rx-1, Rx-2, Rx-3 à travers le commutateur à barres croisées. La troisième loi de formation de faisceau est assignée au premier formateur de faisceau DBF1.

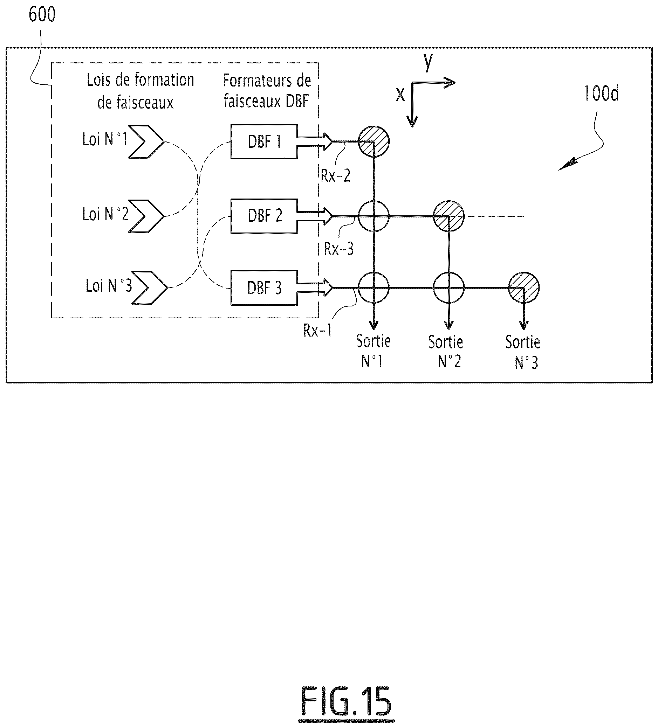

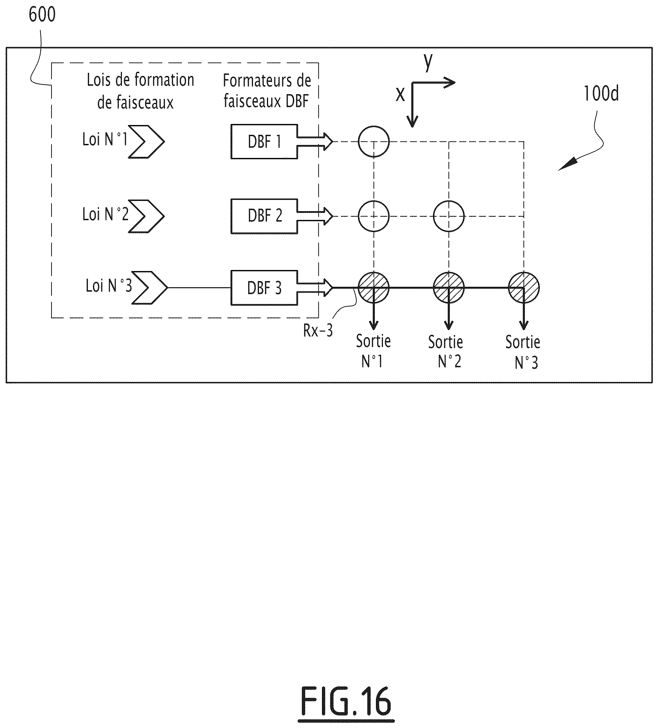

Les figures 15 et 16 représentent des exemples de procédé de configuration d'un processeur selon la première variante du premier mode de réalisation avec la quatrième architecture 100d. Dans la première variante du premier mode de réalisation avec la quatrième architecture 100d, le procédé de configuration est identique à celui pour la première variante du premier mode de réalisation avec la deuxième architecture 100b, si ce n'est que l'ordre d'allocation des lignes par groupe est réalisé de manière décroissante à partir de la dernière ligne formant un côté de la matrice triangulaire.

En particulier, dans un dixième exemple de procédé illustré en figure 15, selon cette première variante du premier mode de réalisation avec la quatrième architecture 100d, le routage à obtenir est identique à celui dans le troisième exemple illustré en figure 8 ; de même que la répartition initiale des lois de formation de faisceau dans les formateurs de faisceaux. Dans ce cas particulier, les commutateurs élémentaires à activer sont les mêmes. Ainsi, en figure 15, les commutateurs élémentaires situés aux intersections correspondant aux couples (ligne, colonne) (1,1), (2,2), (3,3) sont identifiés pour implémenter le routage souhaité des faisceaux Rx-1, Rx-2, Rx-3 à travers le commutateur à barres croisées. En outre, la première loi de formation de faisceau est assignée au troisième formateur de faisceau DBF3 ; la deuxième loi de formation de faisceau est assignée au premier formateur de faisceau DBF1 ; la troisième loi de formation de faisceau est assignée au deuxième formateur de faisceau DBF2.

Dans un onzième exemple de procédé illustré en figure 16, selon cette première variante du premier mode de réalisation avec la quatrième architecture 100d, le routage à obtenir est identique à celui du cinquième exemple illustré en figure 10. Cependant, les commutateurs élémentaires à activer ne sont pas les mêmes car les architectures 100a et 100d sont différentes. Ainsi, en figure 16, les commutateurs élémentaires situés aux intersections ligne-colonne correspondant aux couples (ligne, colonne) (3,1), (3,2), (3,3) sont identifiés pour implémenter le routage souhaité du faisceau Rx-3 à travers le commutateur à barres croisées. La troisième loi de formation de faisceau reste assignée au troisième formateur de faisceau DBF3.

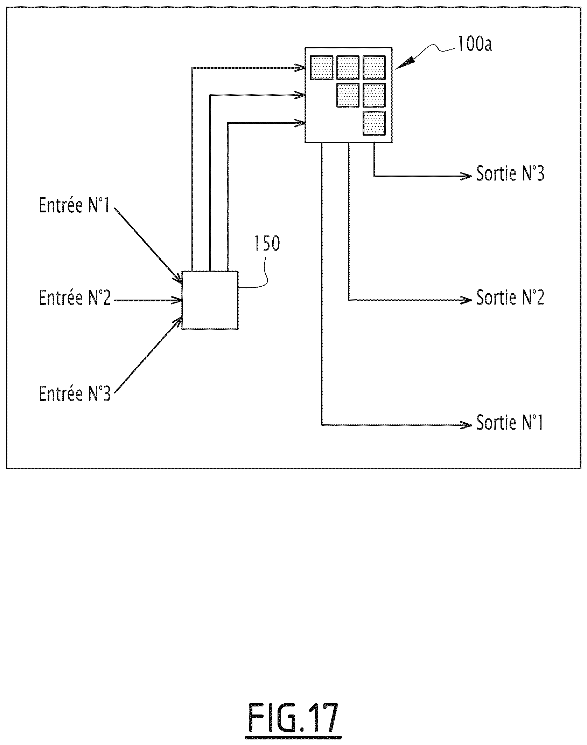

Dans une deuxième variante du premier mode de réalisation, illustrée en figure 17, le dispositif de permutation comprend un commutateur 150 connecté en amont du commutateur à barres croisées 100a. Le commutateur 150 est configuré pour permuter éventuellement les signaux issus de la ou des antennes en réception en amont des entrées du commutateur à barres croisées, en fonction de la configuration de connexions entre les entrées et les sorties du commutateur à barres croisées.

Notamment, le commutateur 150 comprend des entrées permettant de recevoir les signaux issus de la ou des antennes en réception, et des sorties qui sont connectées aux entrées du commutateur à barres croisées 100a, (ou 100b ou 100c ou 100d). Le commutateur 150 réalise une permutation des signaux en amont des entrées du commutateur à barres croisées en correspondance avec l'étape d'allocation de rang.

Le commutateur 150 peut être réalisé en technologie des microsystèmes électromécaniques ou MEMS (pour « Microelectromechanical Systems » en anglais).

Le commutateur 150 peut par exemple être un commutateur unicast optique réalisant un réseau carré de même dimension que le commutateur à barres croisées (100a ou 100b ou 100c ou 100d). Le commutateur optique 150 peut alors comprendre un réseau de miroirs qui permet notamment une dissipation de puissance négligeable. En particulier, des liens de communication de type lien série rapide sur fibre optique peuvent être utilisés pour propager les signaux numériques avec un débit élevé et une bonne efficacité en termes de puissance. De tels liens permettent de s'affranchir des limitations dans les longueurs des chemins entre les unités électroniques du processeur de télécommunication, telles que des cartes électroniques ou d'autres équipements pouvant notamment être embarqués dans un satellite.

La deuxième variante du premier mode de réalisation est avantageuse lorsque le processeur de télécommunication, qui comprend le dispositif d'interconnexion reconfigurable, est dépourvu de formateurs de faisceaux pour réaliser des permutations en amont ou en aval du du dispositif d'interconnexion reconfigurable.

Le procédé de configuration du dispositif d'interconnexion reconfigurable selon la deuxième variante du premier mode de réalisation est identique à celui selon la première variante du premier mode de réalisation, si ce n'est que la permutation des signaux n'est plus réalisée par une permutation des lois de formation de faisceau. Dans la deuxième variante, la permutation des signaux au niveau des entrées du commutateur à barres croisées (100a ou 100b ou 100c ou 100d) est obtenue en changeant la connexion entre les entrées et les sorties du commutateur 150. En particulier, le procédé de configuration varie avec l'architecture 100a, 100b, 100c, 100d comme décrit précédemment. Le procédé de configuration permet d'obtenir une connexion unicast ou multicast dans le dispositif selon la deuxième variante du premier mode de réalisation, notamment avec l'une des architectures 100a, 100b, 100c ou 100d, illustrées en figure 5.

Dans la première variante et la deuxième variante du premier mode de réalisation, les commutateurs élémentaires sont de préférence des interrupteurs 1X1 ou 2X1.

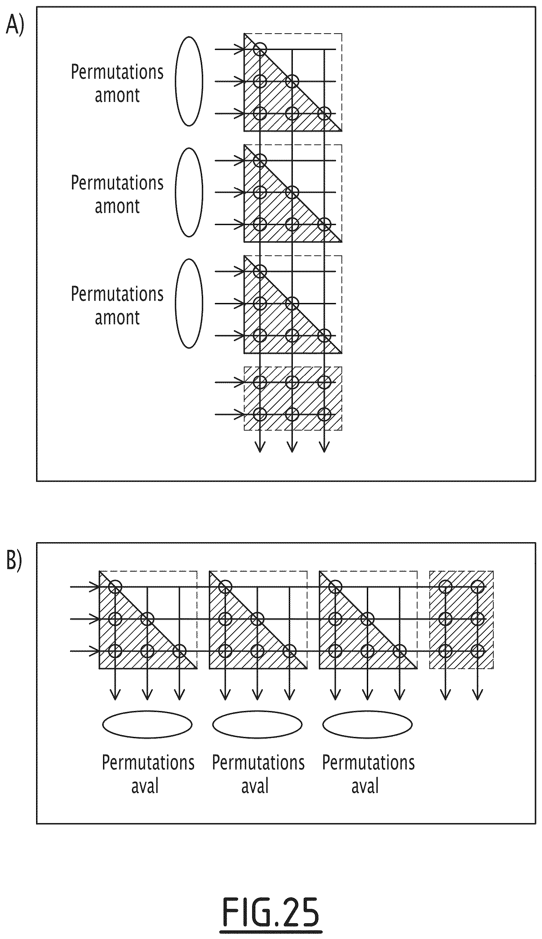

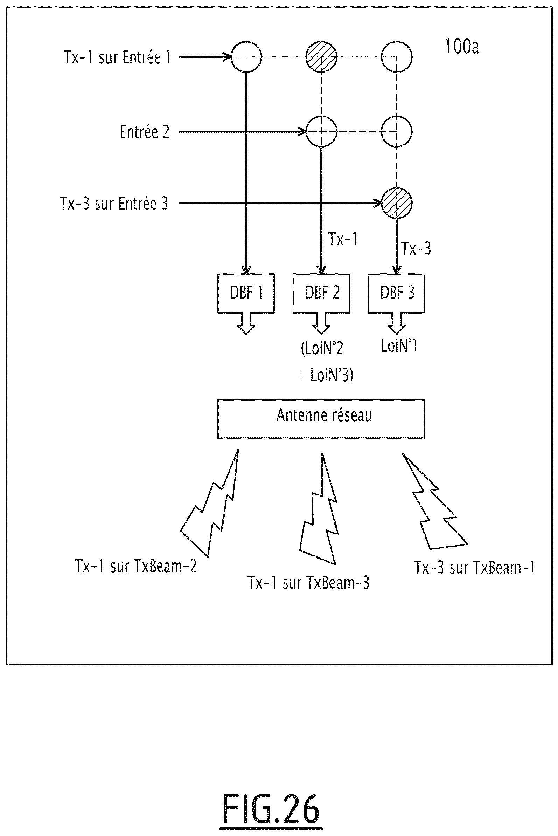

Dans une troisième variante du premier mode de réalisation illustrée en figures 25b et 26, le dispositif de permutation comprend des formateurs de faisceau DBF (pour « Digital Beam Former » en anglais) en émission. Les formateurs de faisceau DBF en émission sont situés en aval du dispositif d'interconnexion reconfigurable, et donc du commutateur à barres croisées 100a, 100b, 100c, 100d. De manière connue en soi, chaque formateur de faisceau DBF1, DBF2, DBF3 reçoit en entrée un des signaux Tx-1, Tx-2, Tx-3 et produit en sortie des signaux d'excitation pour des antennes élémentaires de l'antenne réseau en émission, en fonction d'une loi de formation de faisceau. Les signaux Tx-1, Tx-2, Tx-3 correspondent aux signaux radiofréquence à émettre dans des directions de faisceaux définies par les lois de formation Loi N°1, Loi N°2, Loi N°3, configurées dans les formateurs, qui doivent ensuite être rayonnés par les antennes d'émission. Par exemple, sur la figure 26, le signal Tx-3 est routé et rayonné sur le faisceau TxBeam-1 correspondant à une Loi N°1.

Dans cette troisième variante du premier mode de réalisation, les lois de formation de faisceau peuvent être permutées et combinées en fonction de la configuration des connexions à établir entre les entrées et les sorties du commutateur à barres croisées 100a, 100b, 100c, 100d. Ainsi, un routage des signaux, notamment des faisceaux, à travers le commutateur à barres croisées 100a, 100b, 100c, 100d peut être obtenu en activant les commutateurs élémentaires selon une configuration adaptée aux contraintes de l'agencement triangulaire des commutateurs élémentaires, puis en permutant et en combinant éventuellement les lois de formation de faisceau de manière à modifier la répartition des signaux Tx-1, Tx-2, Tx-3 entre les sorties du commutateur à barres croisées. Par exemple, sur la figure 26, la LoiN°1 pour former le faisceau TxBeam1, initialement et arbitrairement associée au formateur DBF1, est allouée par permutation au formateur DBF3 ; les signaux en sortie des formateurs, en aval du commutateur à barres croisées, sont ainsi permutés du fait de la permutation des lois sur les formateurs. Selon cette première variante, on utilise les formateurs de faisceaux en émission, présents par ailleurs dans le processeur de télécommunication, en tant que dispositif de permutation. Cela permet d'optimiser les ressources de commutation dans le processeur de télécommunication.

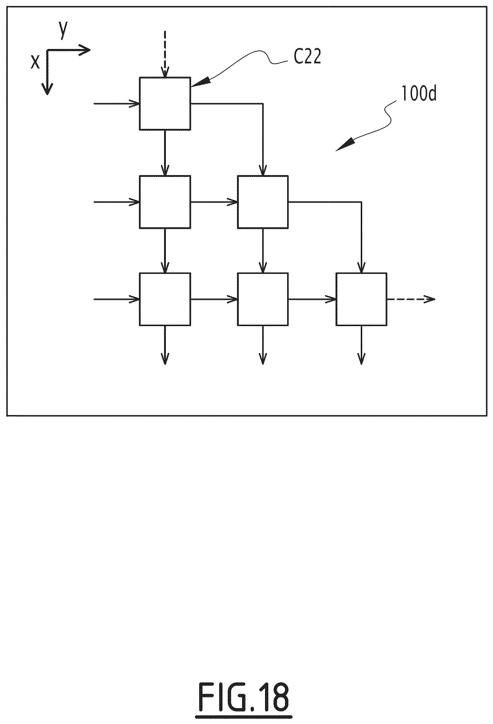

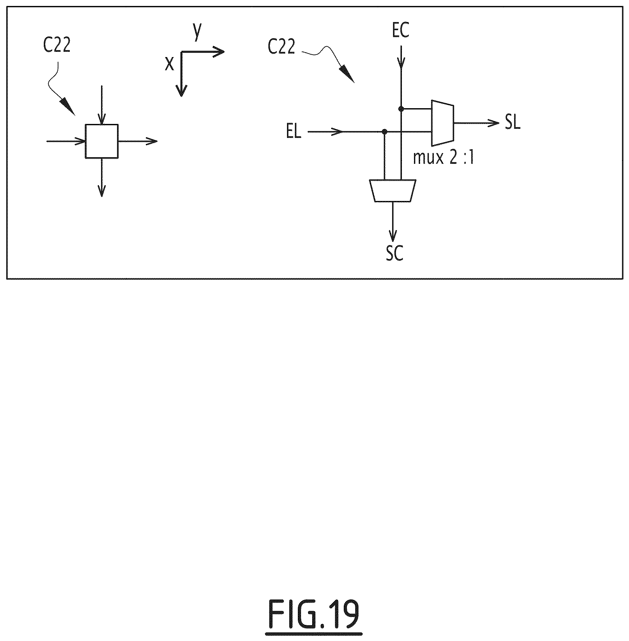

Les figure 18 et 19 illustrent un deuxième mode de réalisation où le caractère non bloquant du commutateur à barres croisées est obtenu grâce à un type de commutateur élémentaire et à un chaînage l'architecture particulier des signaux des commutateurs sur la diagonale.

Dans ce mode de réalisation, les commutateurs élémentaires sont des commutateurs 2X2. Un commutateur 2X2 est par exemple illustré en figure 19. Le commutateur 2X2 référencé C22 réalise deux connexions indépendantes, entre les deux entrées et chaque sortie. Ainsi il réalise sélectivement une connexion entre d'une part une première entrée EL suivant la première dimension X ou une deuxième entrée EC suivant la deuxième dimension Y, et d'autre part une première sortie SL suivant la première dimension X ou une deuxième sortie SC suivant la deuxième dimension Y.

En particulier, la première entrée EL est sur une ligne ; la deuxième entrée EC est sur une colonne ; la première sortie SL est sur une ligne ; et la deuxième sortie SC est sur une colonne. Cependant, les rôles des lignes et des colonnes pourraient être inversées, en fonction du choix de la première dimension X et de la deuxième dimension Y. Le choix de la connexion entre la première entrée EL ou la deuxième entrée Ec, et la première sortie SL ou la deuxième sortie Sc, peut être mis en œuvre par deux fonctions de multiplexage mux 2 : 1. La sélection peut être obtenue en utilisant des commandes indépendantes qui permettent toutes les combinaisons entre les entrées EC, EL et les sorties SC, SL. Par exemple, un signal sur l'une des entrées peut être transmis simultanément vers la première sortie SL et la deuxième sortie SC. En étant positionnés à des intersections ligne-colonne du réseau triangulaire du commutateur à barres croisées, les commutateurs 2x2 C22 peuvent propager de proche en proche un signal sur des lignes ou des colonnes.

Les commutateurs 2x2 C22 forment une matrice triangulaire inférieure suivant la diagonale principale. Autrement dit, les commutateurs 2x2 C22 sont agencés suivant la quatrième architecture 100d illustrée en figure 5. Cependant, les autres arrangements 100a, 100b ou 100c sont également possibles, avec un câblage adapté.

Un exemple de procédé de configuration d'un processeur selon le deuxième mode de réalisation est maintenant décrit. Le procédé cherche à réaliser le routage suivant :

- un premier signal doit être routé vers une deuxième sortie du commutateur à barres croisées 100d située sur la deuxième colonne ;
- un deuxième signal doit être routé vers la troisième sortie située sur la troisième colonne du commutateur à barres croisées 100d ;
- un troisième signal doit être routé vers une première sortie du commutateur à barres croisées 100d située sur la première.

Initialement :

- le premier signal est délivré à une première entrée du commutateur à barres croisées 100d située sur la première ligne ;
- le deuxième signal est délivré à une deuxième entrée du commutateur à barres croisées 100d située sur la deuxième ligne ;
- le troisième signal est délivré à une troisième entrée du commutateur à barres croisées 100d située sur la troisième ligne.

Cet exemple de procédé comprend une première étape de détermination des couples (ligne, colonne) qui correspondent à des besoins de routage à établir entre les entrées et les sorties, qui est identique à celle décrite en relation avec le premier mode de réalisation. Ainsi, dans cet exemple, les couples (ligne, colonne) identifiés sont les suivants : (1, 2), (2, 3), (3,1).

La seconde étape de détermination des commutateurs élémentaires à activer est différente. En particulier, à chaque couple de ligne et de colonne correspond un ensemble de commutateurs 2X2 C22 à activer.

Si l'intersection ligne-colonne correspondant au couple (ligne, colonne) est située hors de la matrice triangulaire, comme c'est le cas pour les couples (1,2), (2,3), il est procédé aux étapes suivantes.

Les commutateurs 2X2 C22 situés sur le même rang suivant la première dimension X que la ligne du couple (ligne, colonne) sont configurés de sorte que la première entrée EL est connectée avec la première sortie SL. Notamment, pour le couple (1,2), le commutateur 2X2 C22 situé sur le rang de ligne 1 est activé, pour que sa première entrée EL soit connectée avec sa première sortie SL.

Les commutateurs 2X2 C22 situés sur la diagonale principale entre le rang du couple suivant la première dimension X et le rang du couple suivant la deuxième dimension Y sont configurés de manière à connecter leur deuxième entrée EC avec leur première sortie SL. Notamment, pour le couple (1,2), il n'y a pas de commutateur 2X2 C22 situé sur la diagonale principale entre le rang de ligne 1 et le rang de colonne 2. On passe alors à l'étape suivante.

Les commutateurs 2X2 C22 situés sur le même rang suivant la deuxième dimension Y que la colonne du couple (ligne, colonne) sont configurés de manière à connecter leur deuxième entrée EC avec leur deuxième sortie SC. Notamment, pour le couple (1,2), les commutateurs 2X2 C22 situés sur le rang de colonne 2 sont activés, pour que leur deuxième entrée EC soit connectée avec leur deuxième sortie SC. Ainsi, le signal délivré sur la première entrée est propagé vers la deuxième sortie.

Les commutateurs 2X2 C22 à activer pour le couple (2,3) sont déterminés de manière similaire. Les commutateurs 2X2 C22 situés sur le rang de ligne 2 sont activés, pour que leur première entrée EL soit connectée à leur première sortie SL. Pour le couple (2, 3), il n'y a pas de commutateur 2X2 C22 situé sur la diagonale principale entre le rang de ligne 2 et le rang de colonne 3. Les commutateurs 2X2 C22 situés sur le rang de colonne 3 sont activés, pour que leur deuxième entrée EC soit connectée avec leur deuxième sortie SC.

Ainsi, le signal délivré sur la deuxième entrée est propagé vers la troisième sortie.

Si l'intersection correspondant au couple (ligne, colonne) est située dans la matrice triangulaire, comme c'est le cas pour le couple (3, 1), il est procédé aux étapes suivantes.

Les commutateurs 2X2 C22 situés sur le même rang suivant la première dimension X que la ligne du couple (ligne, colonne), et ayant un rang suivant la deuxième dimension Y inférieur à celui du couple de ligne et de colonne sont configurés de manière à connecter leur première entrée EL avec leur première sortie SL. Notamment, pour le couple (3,1), il n'y a pas de commutateur 2X2 C22 situé sur le rang de ligne 3, et ayant un rang de colonne inférieur à 1.

Le commutateur 2X2 C22 situé à l'intersection correspondant au couple de ligne et de colonne est configuré de manière à connecter sa première entrée EL avec sa deuxième sortie Sc. Notamment, pour le couple (3, 1), le commutateur 2X2 C22 situé à l'intersection du rang de ligne 3 et du rang de colonne 1 est activé, pour que sa première entrée EL soit connectée avec sa deuxième sortie Sc.

Les commutateurs 2X2 C22 situés sur le même rang suivant la deuxième dimension Y que la colonne du couple (ligne, colonne), et ayant un rang suivant la première dimension X supérieur à celui du couple sont configurés de manière à connecter leur deuxième entrée EC avec leur deuxième sortie SC. Notamment, pour le couple (3,1), il n'y a pas de commutateur 2X2 C22 situé sur le rang de colonne 1, et ayant un rang de ligne supérieur à 3.

Ainsi, le signal délivré sur la troisième entrée est propagé vers la première sortie.

L'agencement des commutateurs 2X2 C22 dans le deuxième mode de réalisation assure un caractère non bloquant du commutateur à barres croisées pour des connexions unicast et multicast. Le deuxième mode de réalisation est particulièrement avantageux lorsque le processeur de télécommunication, qui comprend le dispositif d'interconnexion reconfigurable, est dépourvu de formateurs de faisceaux en réception en amont du dispositif d'interconnexion reconfigurable.

En particulier, dans les exemples de processeur selon l'invention, l'implémentation des commutateurs est principalement dimensionnée par les interfaces réalisant la transmission des signaux entre les circuits intégrés implémentant les commutateurs élémentaires. Le deuxième mode de réalisation permet de réduire le nombre de liens d'interfaces au sein du commutateur à barres croisées, ce qui conduit à une réduction de la dissipation d'énergie.

Dans les exemples de processeur de télécommunication, le dispositif d'interconnexion reconfigurable peut être formé du commutateur à barres croisées 100a, 100b, 100c ou 100d. Alternativement, le dispositif d'interconnexion reconfigurable peut comprendre d'autres composants.

Notamment, dans un troisième mode de réalisation, le dispositif d'interconnexion reconfigurable est un réseau de Clos connu, le commutateur à barres croisées 100a, 100b, 100c, 100d formant un étage central du réseau de Clos. Le réseau de Clos forme une architecture multi-étages, comprenant notamment un nombre impair d'étages, supérieur ou égal à trois. En réalisant le routage des signaux sur différents étages, l'efficacité en termes de ressources matérielles et de dissipation est améliorée par rapport à l'utilisation d'un seul étage comprenant un commutateur à barres croisées. Le troisième mode de réalisation est compatible avec le premier et le deuxième mode de réalisation.

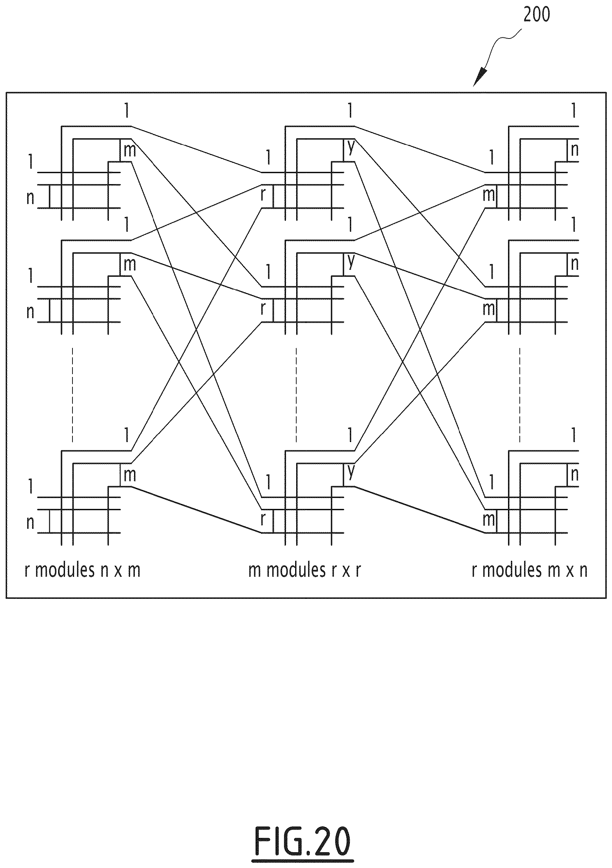

Un exemple de réseau Clos 200 dans lequel tous les étages sont implémentés par des modules de commutateurs à barres croisées, est illustré en figure 20. Le réseau de Clos 200 comprend trois étages, mais il pourrait comprendre un autre nombre impair d'étages. Notamment, chaque étage prend la forme d'une colonne de modules de commutateurs à barres croisées. En particulier, chaque module de commutateur à barres croisées d'un étage est connecté à chaque module de commutateurs à barres croisées de l'étage situé en amont et à chaque module de l'étage situé en aval.

En particulier, le réseau de Clos 200 comprend un étage d'entrée comportant r modules de commutateurs à barres croisées de dimensions n x m. Un étage central comprend m modules de commutateurs à barres croisées de dimensions r x r. Chaque module de l'étage central correspond au commutateur à barres croisées 100a, 100b, 100c, 100d formant une matrice triangulaire, décrit en relation avec les précédents modes de réalisation. Un étage de sortie comprend r modules de commutateurs à barres croisées de dimensions m x n. Le réseau de Clos 200 dans son ensemble réalise un réseau carré de dimension (rn) x (rn).

Notamment, le caractère non-bloquant du réseau de Clos 200 dépend du nombre m de modules dans l'étage central. Ainsi, le réseau est strictement non bloquant si

$$[\text{Math 1}] \ \mathrm{m} \ \geq \ \mathrm{n}_i \ + \ \mathrm{n}_0 \ - \ 1$$

où ni le nombre d'entrées d'un module commutateur à barres croisées de l'étage d'entrée, et n0 le nombre de sorties d'un module commutateur à barres croisées de l'étage de sortie.

Le réseau de Clos est non bloquant à condition de réarranger les connexions antérieures si

$$[\text{Math 2}] \ \mathrm{m} \ \geq \ \max(\mathrm{n}_i, \mathrm{n}_0).$$

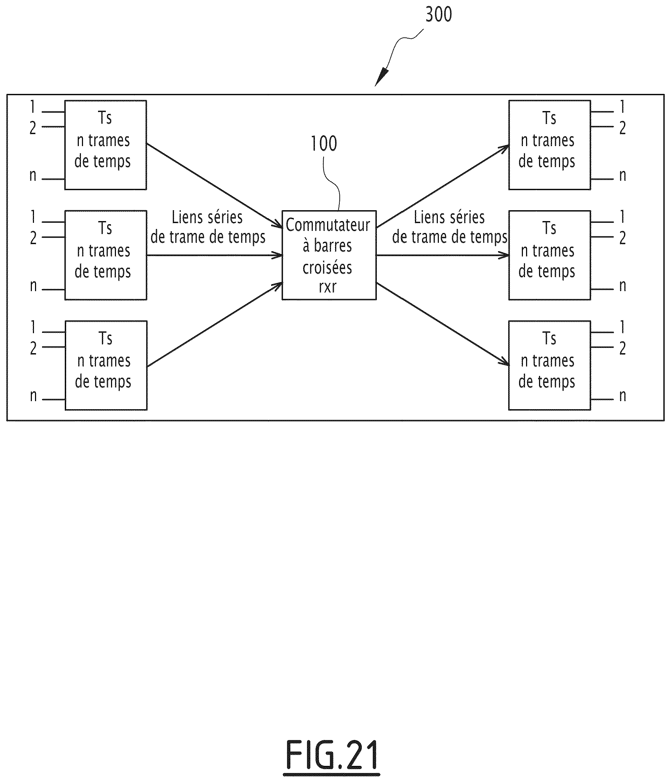

Dans un autre exemple de réseau de Clos 300 illustré en figure 21, l'étage d'entrée et l'étage de sortie peuvent être implémentés avec des modules exploitant un multiplexage temporel. L'étage central est réalisé par un seul module de type spatial, connecté à chaque module des étages d'entrée et de sortie. Les traitements de routage dans l'étage d'entrée et dans l'étage de sortie sont réalisés sous forme temporelle (T), tandis que les traitements de routage de l'étage central sont réalisés sous forme spatiale (S). Le réseau de Clos est alors dit de type T-S-T (pour « temporel-spatial-temporel »). Grâce au multiplexage temporel, le réseau de Clos 300 de type T-S-T réalise, avec un seul module de l'étage central, les opérations de routage des m instances de modules de l'étage central du réseau de Clos 200 de type spatial. A cet effet, de préférence, la fréquence de fonctionnement du module de l'étage central est accélérée m fois par rapport à celle du réseau de Clos 200 de type spatial.

Notamment, l'étage d'entrée comprend plusieurs modules de routage temporel Ts, chacun ayant sa sortie connectée à une entrée du commutateur à barres croisées 100a, 100b, 100c, 100d. En particulier, chaque module temporel Ts comprend n entrées, une mémoire, et une sortie transmettant une trame. Chaque tranche temporelle (slot) dans la trame correspond à un signal d'entrée-sortie dans le réseau de Clos 200 de type spatial. La trame comprend notamment au moins m tranches temporelles. En particulier, le routage des signaux est alors réalisé en écrivant dans la mémoire les valeurs des n signaux d'entrée dans un premier ordre, puis en relisant la mémoire en sortie selon un deuxième ordre définissant la configuration du routage, pour produire la trame de sortie. En particulier, l'étage de sortie a un fonctionnement dual à celui de l'étage d'entrée.

De préférence, les signaux sont transmis entre les modules Ts de l'étage d'entrée ou de sortie et le module de l'étage central par des liens série rapides. Notamment, de tels liens sont adaptés à un très haut débit des trames temporelles avec une bonne efficacité énergétique. Les liens peuvent être des liens électriques, par exemple des câbles coaxiaux, ou optiques, par exemple des fibres optiques.

Grâce au réseau de Clos de type T-S-T, le dispositif d'interconnexion reconfigurable nécessite moins d'instances de modules, de liens d'interface, et est donc plus simple à réaliser ; moyennant notamment une accélération des traitements de routage dans le processeur de télécommunication et une augmentation des débits sur les interfaces.

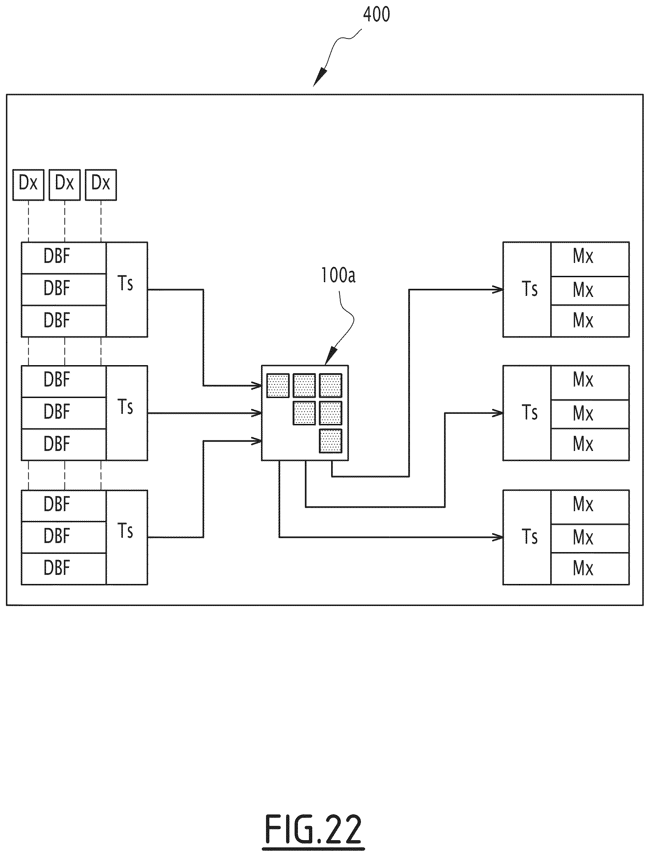

La figure 22 illustre un exemple de processeur de télécommunication 400 comprenant un dispositif de permutation formé par des formateurs de faisceau en réception, tel que décrit précédemment en relation avec la première variante du premier mode de réalisation, et un dispositif d'interconnexion reconfigurable formant un réseau de Clos T-S-T.

Les formateurs de faisceau DBF sont notamment associés par groupes à des modules de routage temporel Ts respectifs de l'étage d'entrée. L'exemple de processeur 400 peut comprendre des démultiplexeurs Dx configurés pour décomposer les signaux issus de la ou des antennes réceptrices en leurs composantes fréquentielles élémentaires. Les composantes fréquentielles produites par les démultiplexeurs Dx peuvent ensuite être traitées par les formateurs de faisceau DBF. Les modules temporels Ts de l'étage de sortie peuvent être associés par groupes à des multiplexeurs Mx qui recomposent les signaux destinés à être émis par la ou les antennes en émission.

De préférence, les formateurs de faisceau DBF sont situés en aval de bancs de filtre réalisant une décomposition spectrale des signaux issus de la ou des antennes réceptrices. En particulier, pour des formateurs de faisceaux numériques, une décomposition spectrale de la bande utile, notamment en bandes élémentaires, est réalisée pour l'ensemble des signaux issus de la ou des antennes réceptrices. Chaque formateur de faisceau numérique traite les bandes élémentaires utiles pour former un faisceau dans une direction spécifique à chaque bande élémentaire. Un formateur de faisceau numérique peut produire des faisceaux dans différentes directions pour différentes sous-bandes, par multiplexage temporel. Pour tout besoin de routage des signaux, il est alors possible de trouver une permutation des lois de formation de faisceau pour les sous-bandes et les directions, notamment en association avec une configuration adaptée des modules Ts de l'étage d'entrée.

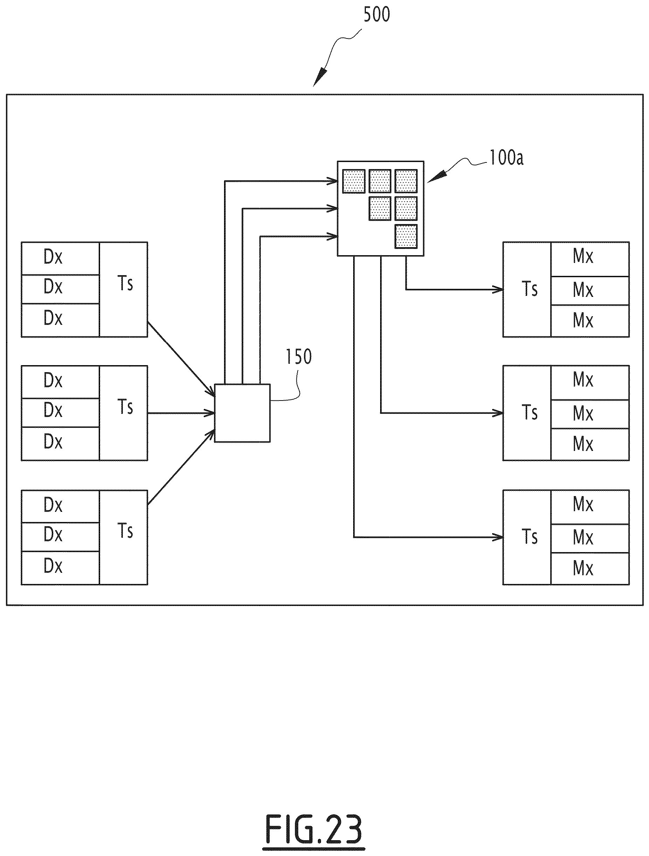

La figure 23 illustre un exemple de processeur de télécommunication 500 comprenant un dispositif de permutation formé d'un commutateur 150, tel que décrit précédemment en relation avec la deuxième variante du premier mode de réalisation, et un dispositif d'interconnexion reconfigurable 100a formant un réseau de Clos T-S-T. Le commutateur 150 est notamment connecté entre l'étage d'entrée et l'étage central du réseau de Clos, de manière à permettre des permutations des signaux en amont des entrées de l'étage central. Le processeur de télécommunication 500 est notamment dépourvu de formateurs de faisceau DBF en réception. L'exemple de processeur 500 peut comprendre des démultiplexeurs Dx configurés pour décomposer les signaux issus de la ou des antennes réceptrices en leurs composantes fréquentielles par bandes élémentaires. Les démultiplexeurs Dx sont notamment associés par groupes à des modules de routage temporel Ts respectifs de l'étage d'entrée. Les modules de routage temporel Ts de l'étage de sortie peuvent être associés par groupes à des multiplexeurs Mx qui recomposent les signaux destinés à être émis par la ou les antennes en émission. Dans cet exemple comprenant le commutateur 150 en tant que dispositif de permutation, les permutations sont réalisées de manière transparente en aval des modules Ts de l'étage d'entrée. C'est aussi le cas si le réseau de Clos est de type spatial.

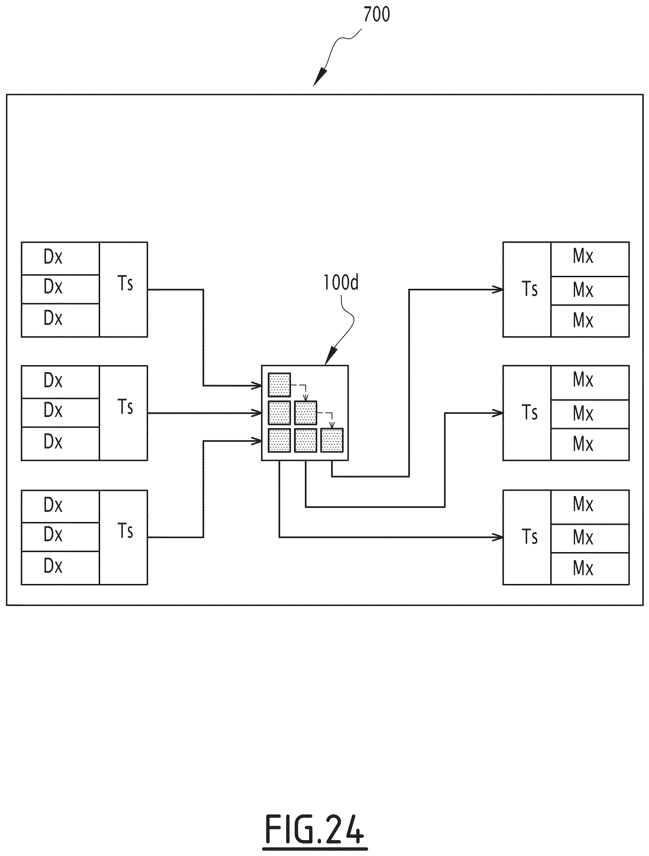

La figure 24 illustre un exemple de processeur de télécommunication 700 selon le deuxième mode de réalisation tel que décrit précédemment, le dispositif d'interconnexion reconfigurable 100d formant un réseau de Clos T-S-T. Le processeur de télécommunication 700 est notamment dépourvu de formateurs de faisceau DBF en réception. L'exemple de processeur 700 peut comprendre des démultiplexeurs Dx configurés pour décomposer les signaux issus de la ou des antennes en leurs composantes fréquentielles élémentaires. Les démultiplexeurs Dx sont notamment associés par groupes à des modules temporels Ts respectifs de l'étage d'entrée. Les modules temporels Ts de l'étage de sortie peuvent être associés par groupes à des multiplexeurs Mx qui mettent en forme les signaux destinés à être émis par la ou les antennes émettrices.

Dans le cas d'un réseau matriciel rectangulaire avec un nombre de lignes N plus grand que le nombre P de colonnes, N > P, l'agencement du réseau matriciel se fait sous la forme d'un ensemble de sous-réseaux matriciels carrés mettant en œuvre des assemblages triangulaires des commutateurs élémentaires, éventuellement complété par un réseau matriciel rectangulaire plein ou partiel. Les permutations sont alors réalisables en amont ou en aval du réseau matriciel.

La figure 25a illustre un cas général de permutations en amont du réseau matriciel selon l'invention, dans le cas N>P.

Le sous-réseau matriciel rectangulaire optionnel permet de réaliser les connexions unicast et multicast sur des signaux d'entrée sans permutations amont et aval. Sa configuration est celle d'un commutateur à barres croisées plein.

Dans le cas d'un réseau matriciel rectangulaire avec un nombre de lignes N plus petit que le nombre P de colonnes, N < P, l'agencement du réseau matriciel se fait sous la forme d'un ensemble de sous-réseaux matriciels carrés mettant en œuvre des assemblages triangulaires des commutateurs élémentaires, éventuellement complété par un réseau matriciel rectangulaire plein ou partiel. Les permutations sont alors réalisables en aval du réseau matriciel.

La figure 25b illustre un cas général de permutations en aval du réseau matriciel selon l'invention.

Dans le cas d'un processeur de télécommunication avec formation de faisceaux en émission, les permutations peuvent être réalisées en aval du réseau matriciel triangulaire. Avec des formateurs de faisceaux en émission, il suffit alors de permuter et/ou de combiner les lois de formations. Les permutations en aval avec des formateurs de faisceaux en émission permettent de réaliser l'ensemble des connexions (i, j) avec le réseau partiel des commutateurs élémentaires.

De manière générale pour des permutations en aval du commutateur à barres croisées, pour le type d'assemblage selon une matrice triangulaire 100a, le classement des groupes de rang de première dimension X (ligne) est fait par ordre décroissant du rang de première dimension X; et l'allocation de rang de deuxième dimension Y (colonne) est décroissante.

Selon les mêmes principes, l'homme du métier pourra adapter les classements pour les autres types d'assemblage.

Ainsi, pour un type d'assemblage selon une matrice triangulaire 100b, le classement des groupes de rang de première dimension X (ligne) est réalisé par ordre décroissant du rang de première dimension X; et l'allocation de rang de deuxième dimension Y (colonne) est alors croissante.

Pour un type d'assemblage selon une matrice triangulaire 100c, le classement des groupes de rang de première dimension X (ligne) est réalisé par ordre croissant du rang de première dimension X; et l'allocation de rang de deuxième dimension Y (colonne) est alors décroissante.

Pour un type d'assemblage selon une matrice triangulaire 100d, le classement des groupes de rang de première dimension X (ligne) est réalisé par ordre croissant du rang de première dimension X; et l'allocation de rang de deuxième dimension Y (colonne) est alors croissante.

Dans un mode de réalisation où les permutations sont effectuées en aval du réseau matriciel des lois de formation de faisceaux en émission, le procédé comprend des étapes consistant à :

- déterminer un ensemble de couples (i, j) correspondant à un besoin de routage entre des signaux en amont et des signaux en aval du dispositif d'interconnexion, en considérant toutes les intersections ligne-colonne du réseau du commutateur à barres croisées ;

    i. déterminer des commutateurs élémentaires de ladite au moins une matrice triangulaire à activer pour ledit routage, ladite étape consistant à :
    ii. organiser lesdits couples (i, j) en groupes de rang ayant un même rang suivant la première dimension ;
    iii. ordonner lesdits groupes de rang selon leur rang suivant la première dimension ;
    iv. allouer successivement à chaque groupe de rang, un rang suivant la deuxième dimension du réseau, et en commençant par le rang suivant la deuxième dimension formant un côté de la matrice triangulaire ;
    v. dans chaque groupe de rang, transposer pour chaque couple, un couple (i, j) en couple (i, rang alloué), activer le commutateur élémentaire du couple (i, rang alloué), et mémoriser la colonne pour le rang alloué ;

- sommer les lois de formations de faisceaux correspondant à ladite colonne pour chaque rang alloué associé à un formateur de faisceau en émission ;
- permuter les signaux de sortie des formateurs de faisceaux en aval du commutateur à barres croisées, en permutant l'affectation des lois sur les formateurs de faisceaux, en correspondance avec l'allocation de rang.

Dans une variante, l'étape de déterminer les commutateurs élémentaires à activer consiste à :

    i. organiser lesdits couples (i, j) en groupes de rang ayant un même rang suivant la première dimension ;
    ii. ordonner lesdits groupes de rang par ordre croissant du rang suivant la première dimension.

Dans un variante alternative, l'étape de déterminer les commutateurs élémentaires à activer consiste à :

    i. organiser lesdits couples (ligne, colonne) en groupes de rang ayant un même rang suivant la première dimension ;
    ii. ordonner lesdits groupes de rang par ordre décroissant du rang suivant la première dimension.

La figure 26 illustre un exemple de permutations en aval du réseau matriciel des lois de formation de faisceaux en émission selon une troisième variante du premier mode de réalisation de l'invention avec un assemblage de commutateurs élémentaires selon une matrice triangulaire 100a.

L'exemple est décrit pour établir des besoins de routage pour des couples ligne-colonne (1,2), (1,3) et (3,1).

Dans une première étape, le procédé permet de déterminer un ensemble de couples (ligne, colonne) qui correspondent au besoin de routage entre les entrées et les sorties du dispositif d'interconnexion. Dans cette étape, on considère toutes les intersections ligne-colonne du réseau. Autrement dit, toutes les intersections du réseau sont prises en compte pour identifier les besoins de routage entre les entrées du commutateur à barres croisées et les faisceaux à émettre, y compris les intersections du réseau qui sont dépourvues de commutateur élémentaire.

Ainsi, dans l'exemple illustré en figure 26 :

- le couple (1,2) désigne un besoin de routage du signal Tx-1 sur la première entrée Entrée1 du commutateur à barres croisées 100a vers le deuxième faisceau TxBeam-2 correspondant à la loi « Loi N°2 »;
- le couple (1,3) désigne un besoin de routage du signal Tx-1 sur la première entrée Entrée1 du commutateur à barres croisées 100a vers le troisième faisceau TxBeam-3 correspondant à la loi « Loi N°3 »;
- le couple (3,1) désigne un besoin de routage du signal Tx-3 sur la troisième entrée Entrée3 du commutateur à barres croisées 100a vers le premier faisceau TxBeam-1 correspondant à la loi « Loi N°1 ».

Dans une seconde étape, le procédé permet de déterminer les commutateurs élémentaires à activer. Cette étape comprend d'abord l'organisation des couples (ligne, colonne) en groupes ayant un même rang suivant la première dimension X du réseau, c'est-à-dire suivant la dimension du réseau le long de laquelle les entrées sont positionnées. En particulier, sur la figure 26, la première dimension X est celle le long de laquelle les lignes d'entrée sont positionnées.

Ainsi, les groupes de rang de ligne suivants sont identifiés :

- groupe 1 correspondant au rang de ligne 1 : {(1,2), (1,3)} ;
- groupe 3 correspondant au rang de ligne 3 : {(3,1)}.

Puis les groupes de rang de ligne 1 et 3 sont ordonnés selon leur rang de ligne suivant la première dimension X. En particulier, pour le commutateur à barres croisées selon la première architecture 100a, les groupes 1 et 3 sont ordonnés par ordre décroissant du rang de ligne. Notamment, en faisant référence à la figure 26, les groupes de rang de ligne 1 et 3 sont ordonnés comme suit {groupe 3, groupe 1}, c'est-à-dire { { (3, 1) }, { (1, 2), (1, 3) } }.

Ensuite, à chaque groupe de rang de ligne 3 et 1, le procédé permet d'allouer successivement un rang suivant la deuxième dimension Y, en commençant par le rang suivant la deuxième dimension Y formant un côté de la matrice triangulaire portant les commutateurs élémentaires. Sur la figure 26, le rang suivant la deuxième dimension Y formant un côté de la matrice triangulaire est le rang de colonne 3 situé sur le côté droit de la matrice triangulaire. Dans ce cas, l'allocation de rang suivant la deuxième dimension Y est alors réalisée par ordre décroissant.

Dans un mode de réalisation, un compteur k de rang suivant la deuxième dimension Y est initialisé à 3, puis décrémenté progressivement à chaque allocation pour les groupes successifs de rang de ligne 3 et 1. Chaque groupe de rang de ligne i est traité successivement : pour chaque connexion (i, j) à établir, il est mémorisé dans une première table l'association entre les index des faisceaux j et les index k des formateurs de faisceaux en émission. Chaque formateur (k) de faisceaux en émission est ensuite configuré avec la somme des lois (Loi N°, ...) de formation correspondant aux directions des faisceaux TxBeam-j..., compte tenu de la première table d'association entre les index des faisceaux j et les index k des formateurs de faisceaux DBF en émission. La sommation des lois est possible pour un même signal source Tx-j, et s'applique aux lois de formation par déphasage (coefficients complexes) ou aux lois de formation par retards (« true-time delay beamforming »). Une deuxième table mémorise l'activation des commutateurs élémentaires (i, k) pour l'ensemble des connexions à établir.

Pour l'exemple considéré, le rang de colonne k=3 est alloué au groupe de rang de ligne 3 { (3, 1) }. Pour la connexion (i=3, j=1), il est mémorisé dans la première table, l'association entre l'index j=1 du faisceau TxBeam-1 et l'index k=3 du formateur de faisceaux en émission DBF-3. Le formateur de faisceau DBF-3 est configuré avec la somme de la seule loi de formation Loi n°1 identifiée par j=1 dans la première table pour k=3. Il est aussi mémorisé dans la deuxième table, l'activation du commutateur élémentaire (i=3, k=3).

Ensuite le rang de colonne k=2 est alloué au groupe de rang de ligne 1 { (1, 2), (1, 3) }. Pour la connexion (i=1, j=2), il est mémorisé dans la première table, l'association entre l'index j=2 du faisceau TxBeam-2 et l'index k=2 du formateur de faisceaux en émission DBF-2. Pour la connexion (i=1, j=3), il est mémorisé dans la première table, l'association entre l'index j=3 du faisceau TxBeam-3 et l'index k=2 du formateur de faisceaux en émission DBF-2. Le formateur DBF-2 est configuré avec la somme des lois de formation Loi n°2 et Loi n°3 identifiée par j={2, 3} dans la première table pour k=2. Il est aussi mémorisé dans la deuxième table, l'activation du commutateur élémentaire (i=1, k=2).

Les commutateurs élémentaires sont ainsi activés compte tenu de la deuxième table d'activation : { ( 3, 3), (1, 2) }.

De préférence, les étapes du procédé de reconfiguration du processeur de télécommunication selon l'invention sont mises en œuvre au moins en partie dans une unité de commande du processeur, notamment en association avec une unité de mémoire.

Par convention, les figures ont été décrites en prenant le coin supérieur gauche pour origine des rangs de ligne et de colonne. Mais un autre point du réseau de ligne et de colonnes peut être choisi comme origine, les descriptions des exemples pouvant être facilement adaptées en correspondance.

## Revendications

1. Processeur de télécommunication (1000) comprenant un dispositif d'interconnexion non bloquant reconfigurable, configuré pour recevoir sur des entrées des signaux issus d'une ou plusieurs antennes en réception et délivrer via des sorties lesdits signaux vers une ou plusieurs antennes en émission ;

   le dispositif d'interconnexion comprenant un commutateur à barres croisées (100) formant un réseau à deux dimensions de N lignes et de P colonnes, les entrées du commutateur à barres croisées étant situées suivant une première dimension du réseau, les sorties du commutateur à barres croisées étant situées suivant une deuxième dimension du réseau ;
   le commutateur à barres croisées comprenant un nombre de commutateurs élémentaires inférieur au nombre d'intersections ligne-colonne du réseau à deux dimensions, pour router lesdits signaux des entrées vers les sorties ;
   les commutateurs élémentaires étant agencés sur le réseau à des intersections ligne-colonne pour former au moins une matrice triangulaire, tel que toutes les intersections ligne-colonne dans ladite au moins une matrice triangulaire comportent un commutateur élémentaire pouvant être activé, et tel que tout ou partie des intersections ligne-colonne situées en dehors de ladite au moins une matrice triangulaire ne comportent pas de commutateur élémentaire.

2. Processeur selon la revendication 1 dans lequel le dispositif d'interconnexion est couplé à un dispositif de permutation permettant de permuter les signaux en entrée ou en sortie de ladite au moins une matrice triangulaire.

3. Processeur de télécommunication selon la revendication 2, comprenant des formateurs de faisceau en réception associés à des lois de formation de faisceau, et où ledit dispositif de permutation est configuré pour permuter une ou plusieurs lois de formation de faisceau entre les formateurs de faisceau, de manière à permuter lesdits signaux en amont de ladite au moins une matrice triangulaire, en fonction du besoin de routage entre les signaux en amont et les signaux en aval du dispositif d'interconnexion configurable.

4. Processeur de télécommunication selon la revendication 2, comprenant des formateurs de faisceau en émission associés à des lois de formation de faisceau, et où ledit dispositif de permutation est configuré pour permuter une ou plusieurs lois de formation de faisceau entre les formateurs de faisceau, de manière à permuter lesdits signaux en aval de ladite au moins une matrice triangulaire, en fonction du besoin de routage entre les signaux en amont et les signaux en aval du dispositif d'interconnexion configurable.

5. Processeur de télécommunication selon l'une quelconque des revendications précédentes, dans lequel le réseau à deux dimensions de N lignes et de P colonnes forme un réseau matriciel carré avec N=P ou forme un réseau matriciel rectangulaire avec N ≠P.

6. Processeur de télécommunication selon l'une quelconque des revendications précédentes, dans lequel lesdits commutateurs élémentaires formant au moins une matrice triangulaire sont des commutateurs 1x1 ou des commutateurs 2x1.

7. Processeur de télécommunication selon l'une quelconque des revendications 1 à 6, dans lequel lesdits commutateurs élémentaires formant au moins une matrice triangulaire sont des commutateurs 2X2 configurés pour interconnecter sélectivement une première entrée suivant la première dimension ou une deuxième entrée suivant la deuxième dimension avec une première sortie suivant la première dimension et de manière indépendante avec une deuxième sortie suivant la deuxième dimension.

8. Processeur de télécommunication selon la revendication 7 dans lequel lesdits commutateurs élémentaires sur la diagonale de ladite au moins une matrice triangulaire sont connectés successivement entre eux, par connexion de la sortie ligne de chaque commutateur sur l'entrée colonne du commutateur suivant sur la diagonale.

9. Processeur de télécommunication selon la revendication 2 dans lequel le dispositif de permutation comprend un commutateur 150 connecté en amont du commutateur à barres croisées, ledit commutateur étant configuré pour répartir lesdits signaux entre les entrées du commutateur à barres croisées en fonction du besoin de routage entre les signaux en amont et les signaux en aval du dispositif d'interconnexion configurable.

10. Procédé de configuration d'un processeur de télécommunication selon la revendication 3, ledit procédé comprenant, pour un routage de signaux, des étapes consistant à :

    - déterminer un ensemble de couples (i, j) correspondant à un besoin de routage entre des signaux en amont et des signaux en aval du dispositif d'interconnexion, en considérant toutes les intersections ligne-colonne du réseau du commutateur à barres croisées,
- déterminer des commutateurs élémentaires de ladite au moins une matrice triangulaire à activer pour ledit routage, ladite étape consistant à :

    i. organiser lesdits couples (i, j) en groupes de rang ayant un même rang suivant la première dimension ;
    ii. déterminer dans chaque groupe de rang, un rang extremum suivant la deuxième dimension ;
    iii. ordonner lesdits groupes de rang selon leur rang extremum suivant la deuxième dimension ;
    iv. allouer successivement à chaque groupe de rang, un rang suivant la première dimension du réseau en suivant l'ordre obtenu à l'issu dudit ordonnancement, et en commençant par le rang suivant la première dimension formant un côté de la matrice triangulaire ;
    v. pour chaque groupe de rang, transposer chaque couple (i, j) en couple (rang alloué, j), et activer le commutateur élémentaire dudit couple(rang alloué, j) ;

- permuter les signaux en entrée du commutateur à barres croisées, en correspondance avec l'allocation de rang.

**11.** Procédé selon la revendication 10, dans lequel l'étape de déterminer les commutateurs élémentaires à activer comprenant :

    i. organiser lesdits couples (i, j) en groupes de rang ayant un même rang suivant la première dimension ;
    ii. déterminer dans chaque groupe de rang, un rang minimal suivant la deuxième dimension ;
    iii. ordonner lesdits groupes de rang par ordre croissant du rang minimal suivant la deuxième dimension.

**12.** Procédé selon la revendication 10, dans lequel l'étape de déterminer les commutateurs élémentaires à activer comprenant :

    i. organiser lesdits couples (i, j) en groupes de rang ayant un même rang suivant la première dimension ;
    ii. déterminer dans chaque groupe de rang, un rang maximal suivant la deuxième dimension ;
    iii. ordonner lesdits groupes de rang par ordre décroissant du rang maximal suivant la deuxième dimension.

**13.** Procédé de configuration d'un processeur de télécommunication selon la revendication 4, ledit procédé comprenant, pour un routage de signaux, des étapes consistant à :

    - déterminer un ensemble de couples (i, j) correspondant à un besoin de routage entre des signaux en amont et des signaux en aval du dispositif d'interconnexion, en considérant toutes les intersections ligne-colonne du réseau du commutateur à barres croisées ;
    - déterminer des commutateurs élémentaires de ladite au moins une matrice triangulaire à activer pour ledit routage, ladite étape consistant à :

        i. organiser lesdits couples (i, j) en groupes de rang ayant un même rang suivant la première dimension ;
        ii. ordonner lesdits groupes de rang selon leur rang suivant la première dimension ;
        iii. allouer successivement à chaque groupe de rang, un rang suivant la deuxième dimension du réseau, et en commençant par le rang suivant la deuxième dimension formant un côté de la matrice triangulaire ;
        iv. dans chaque groupe de rang, transposer pour chaque couple, un couple (i, j) en couple (i, rang alloué), activer le commutateur élémentaire du couple (i, rang alloué), et mémoriser le rang j suivant la deuxième dimension pour le rang alloué ;

    - sommer les lois de formations de faisceaux correspondant aux rangs suivant la deuxième dimension mémorisés pour un même rang alloué associé à un formateur de faisceau en émission ;
    - permuter les signaux de sortie des formateurs de faisceaux en aval du commutateur à barres croisées, en permutant l'affectation des lois sur les formateurs de faisceaux, en correspondance avec l'allocation de rang.

**14.** Procédé selon la revendication 13, dans lequel l'étape de déterminer les commutateurs élémentaires à activer consiste à :

    i. organiser lesdits couples (i, j) en groupes de rang ayant un même rang suivant la première dimension ;
    ii. ordonner lesdits groupes de rang par ordre croissant du rang suivant la première dimension.

**15.** Procédé selon la revendication 13, dans lequel l'étape de déterminer les commutateurs élémentaires à activer consiste à :

 i. organiser lesdits couples (i, j) en groupes de rang ayant un même rang suivant la première dimension ;
 ii. ordonner lesdits groupes de rang par ordre décroissant du rang suivant la première dimension.

1000

Rx / GW

Réseau
d'antennes

ADC

Dx

Dx

Dx

Dx

D
B
F
_
Rx

-110-

D
B
F
_
Tx

Mx

Mx

Mx

Mx

Tx / GW

Réseau
d'antennes

DAC

## FIG.1

FIG.2

X1 ○

X2 ○

X3 ○

X4 ○

Y1    Y2    Y3    Y4

# FIG.3

FIG.4

FIG.5

600

Lois de formation de faisceaux

Formateurs de faisceaux DBF

Loi N°1

Loi N°2

Loi N°3

DBF 1

DBF 2

DBF 3

Rx-3

Rx-1

Rx-2

100a

y

x

Sortie N°1

Sortie N°2

Sortie N°3

## FIG.6

600

Lois de formation de faisceaux | Formateurs de faisceaux DBF

Loi N°1

Loi N°2

Loi N°3

DBF 1

DBF 2

DBF 3

Rx-3

Rx-2

Rx-1

y

x

100a

Sortie N°1

Sortie N°2

Sortie N°3

## FIG.7

600

Lois de formation | Formateurs de
de faisceaux | faisceaux DBF

Loi N°1

Loi N°2

Loi N°3

DBF 1

DBF 2

DBF 3

Rx-2

Rx-3

Rx-1

y

x

100a

Sortie
N°1

Sortie
N°2

Sortie
N°3

FIG.8

600

Lois de formation
de faisceaux

Formateurs de
faisceaux DBF

Loi N°1

Loi N°2

Loi N°3

DBF 1

DBF 2

DBF 3

y

x

100a

Rx-2

Rx-1

Sortie
N°1

Sortie
N°2

Sortie
N°3

FIG.9

600

Lois de formation
de faisceaux

Formateurs de
faisceaux DBF

Loi N°1

Loi N°2

Loi N°3

DBF 1

DBF 2

DBF 3

Rx-3

y

x

100a

Sortie
N°1

Sortie
N°2

Sortie
N°3

FIG.10

600

Lois de formation de faisceaux | Formateurs de faisceaux DBF

y

x

100c

Loi N°1

DBF 1

Rx-1

Loi N°2

DBF 2

Rx-3

Loi N°3

DBF 3

Rx-2

Sortie N°1

Sortie N°2

Sortie N°3

FIG.11

600

Lois de formation | Formateurs de
de faisceaux | faisceaux DBF

Loi N°1 >

DBF 1

Loi N°2 >

DBF 2

Loi N°3 >

DBF 3

Rx-3

y
x

100c

Sortie N°1

Sortie N°2

Sortie N°3

# FIG.12

600

Lois de formation de faisceaux | Formateurs de faisceaux DBF

y

x

100b

Loi N°1 — DBF 1 → Rx-1

Loi N°2 — DBF 2 → Rx-3

Loi N°3 — DBF 3 → Rx-2

Sortie N°1

Sortie N°2

Sortie N°3

## FIG.13

FIG.14

600

Lois de formation
de faisceaux

Formateurs de
faisceaux DBF

Loi N°1 ⟩

Loi N°2 ⟩

Loi N°3 ⟩

DBF 1

DBF 2

DBF 3

Rx-2

Rx-3

Rx-1

y

x

100d

Sortie
N°1

Sortie
N°2

Sortie
N°3

FIG.15

600

Lois de formation
de faisceaux

Formateurs de
faisceaux DBF

y

x

100d

Loi N°1

DBF 1

Loi N°2

DBF 2

Loi N°3

DBF 3

Rx-3

Sortie
N°1

Sortie
N°2

Sortie
N°3

FIG.16

Entrée N°1

Entrée N°2

Entrée N°3

150

100a

Sortie N°3

Sortie N°2

Sortie N°1

## FIG.17

FIG.18

## FIG.19

r modules n x m       m modules r x r       r modules m x n

## FIG.20

300

1
2
n

Ts
n trames
de temps

100

Ts
n trames
de temps

1
2

n

1
2
n

Ts
n trames
de temps

Liens séries
de trame de temps

Commutateur
à barres
croisées
rxr

Liens séries
de trame de temps

Ts
n trames
de temps

1
2

n

1
2
n

Ts
n trames
de temps

Ts
n trames
de temps

1
2

n

# FIG.21

400

Dx Dx Dx

| DBF | |
| DBF | Ts |
| DBF | |

| DBF | |
| DBF | Ts |
| DBF | |

| DBF | |
| DBF | Ts |
| DBF | |

100a

| Ts | Mx |
| | Mx |
| | Mx |

| Ts | Mx |
| | Mx |
| | Mx |

| Ts | Mx |
| | Mx |
| | Mx |

# FIG.22

500

100a

Dx
Dx
Dx
Ts

Dx
Dx
Dx
Ts

Dx
Dx
Dx
Ts

150

Ts
Mx
Mx
Mx

Ts
Mx
Mx
Mx

Ts
Mx
Mx
Mx

# FIG.23

# FIG.24

FIG.25

Tx-1 sur Entrée 1

Entrée 2

Tx-3 sur Entrée 3

100a

Tx-1

Tx-3

DBF 1    DBF 2    DBF 3

(LoiN°2
+ LoiN°3)

LoiN°1

Antenne réseau

Tx-1 sur TxBeam-2

Tx-1 sur TxBeam-3

Tx-3 sur TxBeam-1

# FIG.26

Europäisches
Patentamt

European
Patent Office

Office européen
des brevets

## RAPPORT DE RECHERCHE EUROPEENNE

**Numéro de la demande**

EP 25 22 0522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 81 961 E (IND DES TELECOMM ET DE L ELECT) 6 décembre 1963 (1963-12-06) * alinéa [0007] - alinéa [0093]; figures 1-9d * ----- | 1-15 | INV. H04B1/00 |
| A | EP 2 688 216 B1 (THALES SA [FR]) 4 mars 2015 (2015-03-04) * le document en entier * ----- | 1-15 | |

**DOMAINES TECHNIQUES RECHERCHES (IPC)**

H04B

Le présent rapport a été établi pour toutes les revendications

| Lieu de la recherche | Date d'achèvement de la recherche | Examinateur |
|---|---|---|
| Munich | 24 février 2026 | Ayala Perriello, M |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.........................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 25 22 0522**

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**24-02-2026**

| Document brevet cité au rapport de recherche | | Date de publication | Membre(s) de la famille de brevet(s) | | Date de publication |
|---|---|---|---|---|---|
| FR 81961 | E | 06-12-1963 | FR | 81961 E | 06-12-1963 |
|  |  |  | FR | 1294203 A | 26-05-1962 |
| EP 2688216 | B1 | 04-03-2015 | EP | 2688216 A1 | 22-01-2014 |
|  |  |  | FR | 2993732 A1 | 24-01-2014 |

Pour tout renseignement concernant cette annexe : voir Journal Officiel de l'Office européen des brevets, No.12/82

EPO FORM P0460